# EUROPEAN PATENT APPLICATION

(11) **EP 4 485 157 A1**
(43) Date of publication of application: **01.01.2025**
(21) Application number: 23787838.4
(22) Date of filing: 14.04.2023
(51) Int. Cl.: G06F 3/0484

(54) **DEVICE CONTROL METHOD AND ELECTRONIC DEVICE**

(30) Priority: 15.04.2022 CN 202210396038
(71) Applicant: Huawei Technologies Co., Ltd., Shenzhen, Guangdong 518129 (CN)
(72) Inventor: FU, Jinxin, Shenzhen, Guangdong 518129 (CN); WU, Weichun, Shenzhen, Guangdong 518129 (CN)
(74) Representative: Isarpatent
(86) International application number: PCT/CN2023/088425
(87) International publication number: WO 2023/198196

(57) **Abstract**

A device control method and an electronic device are provided, and relate to the field of terminal technologies, to improve device control efficiency. The method is applied to a first electronic device. The method includes: displaying a first interface, where the first interface includes a first hyperlink; and receiving an operation performed by a user on the first hyperlink, and displaying a second interface, where the second interface includes M controls used to control a second electronic device, the M controls include a first control, and a control parameter corresponding to the first control is determined based on the first hyperlink.

## Description

This application claims priority to Chinese Patent Application No. 202210396038.X, filed with the China National Intellectual Property Administration on April 15, 2022 and entitled "DEVICE CONTROL METHOD AND ELECTRONIC DEVICE", which is incorporated herein by reference in its entirety.

### TECHNICAL FIELD

This application relates to the field of terminal technologies, and in particular, to a device control method and an electronic device.

### BACKGROUND

Currently, a user may control a smart home device by using various smart home applications. Using a mobile phone as an example, an application used to control a smart home device may be installed on the mobile phone, and the user operates the application to trigger the mobile phone to control the corresponding smart home device.

In this manner, the user needs to find a target application used to control the smart home device among many applications on a desktop, which needs to consume specific time. In other words, the user cannot quickly obtain an entry for controlling the smart home device, and human-machine interaction performance is poor.

### SUMMARY

This application provides a device control method and an electronic device, to improve device control efficiency.

To achieve the foregoing objectives, embodiments of this application provide the following technical solutions.

According to a first aspect, a device control method is provided, and is applied to a first electronic device or a component (for example, a chip system) that can implement a function of the first electronic device. The method includes:
displaying a first interface, where the first interface includes a first hyperlink; and receiving an operation performed by a user on the first hyperlink, and displaying a second interface, where the second interface includes M controls used to control the second electronic device, the M controls include a first control, and a control parameter corresponding to the first control is determined based on the first hyperlink.

The user may conveniently and quickly call, through an interface currently displayed on the first electronic device, a device control interface associated with the current interface (for example, a recipe making interface). In this way, time required for device control can be reduced, and device control efficiency can be improved. In addition, control parameters corresponding to some controls on the foregoing device control interface are automatically set based on the hyperlink, and the user does not need to manually adjust the control parameters corresponding to the controls. This greatly simplifies a device control operation procedure of the user, and further improves device control efficiency.

In a possible design, the method further includes:
identifying information related to the second electronic device on the first interface; and
setting the first hyperlink based on the information related to the second electronic device.

In this way, the first electronic device may set the first hyperlink based on the identified information related to the second electronic device, and an application scenario of the technical solution is expanded, so that the user can obtain, in various scenarios, the first hyperlink that can be used to control a smart home device.

In a possible design, the identifying information related to the second electronic device on the first interface includes:
detecting a target operation input by the user, and identifying the information related to the second electronic device on the first interface.

The target operation may represent a device control intention of the user. In this way, semantic identification may be performed based on the device control intention of the user. When the device control intention of the user is not detected (that is, the target operation is not detected), semantic identification is not performed, so that a frequency of semantic identification can be reduced, and computing power consumption of the first electronic device is further reduced.

In a possible design, before the setting the first hyperlink based on the information related to the second electronic device, the method further includes: displaying first prompt information, where the first prompt information is used to prompt whether to set a hyperlink; and
the setting the first hyperlink based on the information related to the second electronic device includes: detecting an operation that is input by the user and that indicates to set a hyperlink, and setting the first hyperlink based on the information related to the second electronic device.

In a possible design, the first hyperlink is preset.

In a possible design, after the receiving an operation performed by a user on the first hyperlink, the method further includes:
displaying second prompt information, where the second prompt information is used to prompt whether to control the second electronic device.

In a possible design, the displaying a second interface includes:
detecting an operation that is input by the user and that indicates to control the second electronic device, and displaying the second interface.

In this way, after the device control intention of the user is detected, the second interface used to control the second electronic device may be displayed, so that a device control requirement of the user can be met.

In a possible design, the method further includes: obtaining user information; and
the displaying a second interface includes: if the user information indicates that the user expects to control the second electronic device, displaying the second interface.

In a possible design, after the displaying the second interface, the method further includes: sending a control instruction to the second electronic device, where the control instruction indicates the second electronic device to perform the target operation, and the target operation is determined based on the first hyperlink.

In a possible design, the sending a control instruction to the second electronic device includes:
detecting the operation that is input by the user and that indicates to control the second electronic device, and sending the control instruction to the second electronic device.

In a possible design, the method further includes: obtaining user information; and
the sending a control instruction to the second electronic device includes: if the user information indicates that the user expects to control the second electronic device, sending the control instruction to the second electronic device.

In a possible design, the M controls include a second control, a UI effect of the second control is determined by the first electronic device based on a display parameter of the first electronic device and a target function corresponding to the second control, and the display parameter includes a size of a display and a shape of the display.

In a possible design, the method further includes: receiving a profile of the second electronic device from a device management platform, where the profile includes information about one or more functions of the second electronic device, and the one or more functions includes the target function.

According to a second aspect, a device control apparatus is provided, and may be a first electronic device or a component (for example, a chip system) that can implement a function of the first electronic device. The apparatus includes:
a display unit, configured to display a first interface, where the first interface includes a first hyperlink; and
an input unit, configured to receive an operation performed by a user on the first hyperlink, where
the display unit is further configured to display a second interface, where the second interface includes M controls used to control the second electronic device, the M controls include a first control, and a control parameter corresponding to the first control is determined based on the first hyperlink.

In a possible design, the apparatus further includes:
a processing unit, configured to identify information related to the second electronic device on the first interface, where
the processing unit is further configured to set the first hyperlink based on the information related to the second electronic device.

For example, with further development and promotion of an all-in-one smart home, interaction between a smart device and a consumer is ubiquitous, and a reference manner similar to that of supporting picture insertion and text insertion may be referenced as a unified abstract resource in control or management that supports a home device in a text or a picture. Smart home devices are integrated into various entrances or behaviors in life.

In a possible design, the identifying information related to the second electronic device on the first interface includes:
detecting a target operation input by the user, and identifying the information related to the second electronic device on the first interface.

In a possible design, the display unit is further configured to display first prompt information, where the first prompt information is used to prompt whether to set a hyperlink; and
the setting the first hyperlink based on the information related to the second electronic device includes: detecting an operation that is input by the user and that indicates to set a hyperlink, and setting the first hyperlink based on the information related to the second electronic device.

In a possible design, the first hyperlink is preset.

In a possible design, the display unit is further configured to display second prompt information, where the second prompt information is used to prompt whether to control the second electronic device.

In a possible design, the displaying a second interface includes:
detecting an operation that is input by the user and that indicates to control the second electronic device, and displaying the second interface.

In a possible design, the processing unit is further configured to obtain user information; and
the displaying a second interface includes: if the user information indicates that the user expects to control the second electronic device, displaying the second interface.

In a possible design, the apparatus further includes:
a communication unit, configured to send a control instruction to the second electronic device, where the control instruction indicates the second electronic device to perform the target operation, and the target operation is determined based on the first hyperlink.

In a possible design, the sending a control instruction to the second electronic device includes:

The processing unit detects an operation that is input by the user and that indicates to control the second electronic device, and controls the communication unit to send the control instruction to the second electronic device.

In a possible design, the processing unit is further configured to obtain user information; and
the sending a control instruction to the second electronic device includes: if the user information indicates that the user expects to control the second electronic device, sending the control instruction to the second electronic device.

In a possible design, the M controls include a second control, a UI effect of the second control is determined by the first electronic device based on a display parameter of the first electronic device and a target function corresponding to the second control, and the display parameter includes a size of a display and a shape of the display.

In a possible design, the communication unit is further configured to receive a profile of the second electronic device from a device management platform, where the profile includes information about one or more functions of the second electronic device, and the one or more functions includes the target function.

According to a third aspect, an embodiment of this application provides an electronic device. The electronic device has a function of implementing the method according to any one of the foregoing aspects and any possible implementation of the foregoing aspect. The function may be implemented by hardware, or may be implemented by hardware executing corresponding software. The hardware or the software includes one or more modules corresponding to the function.

According to a fourth aspect, an embodiment of this application provides a computer-readable storage medium. The computer-readable storage medium stores a computer program (which may also be referred to as instructions or code). When the computer program is executed by an electronic device, the electronic device is enabled to perform the method according to any one of the first aspect or the implementations of the first aspect.

According to a fifth aspect, an embodiment of this application provides a computer program product. When the computer program product runs on an electronic device, the electronic device is enabled to perform the method according to any one of the first aspect or the implementations of the first aspect.

According to a sixth aspect, an embodiment of this application provides a circuit system. The circuit system includes a processing circuit, and the processing circuit is configured to perform the method according to any one of the first aspect or the implementations of the first aspect.

According to a seventh aspect, an embodiment of this application provides a chip system, including at least one processor and at least one interface circuit. The at least one interface circuit is configured to: perform a transceiver function, and send instructions to the at least one processor. When the at least one processor executes the instructions, the at least one processor performs the method according to any one of the first aspect or the implementations of the first aspect.

### BRIEF DESCRIPTION OF DRAWINGS

FIG. 1A is a diagram of an architecture of a device control system according to an embodiment of this application;
FIG. 1B is a diagram of an architecture of a device control system according to an embodiment of this application;
FIG. 2A is a diagram of a structure of a first electronic device according to an embodiment of this application;
FIG. 2B is a diagram of a structure of a first electronic device according to an embodiment of this application;
FIG. 3 is a diagram of a software structure of a first electronic device according to an embodiment of this application;
FIG. 4 is a diagram of a structure of a device management rendering engine according to an embodiment of this application;
FIG. 5(a) and FIG. 5(b) are a diagram of an interface according to an embodiment of this application;
FIG. 6(a) to FIG. 6(c) are a diagram of an interface according to an embodiment of this application;
FIG. 7A(a) and FIG. 7A(b) are a diagram of an interface according to an embodiment of this application;
FIG. 7B(a) and FIG. 7B(b) are a diagram of an interface according to an embodiment of this application;
FIG. 8A(a) and FIG. 8A(b) are a diagram of an interface according to an embodiment of this application;
FIG. 8B(a) and FIG. 8B(b) are a diagram of an interface according to an embodiment of this application;
FIG. 9A(a) to FIG. 9A(c) are a diagram of an interface according to an embodiment of this application;
FIG. 9B(a-1), FIG. 9B(b-1), FIG. 9B(a-2), and FIG. 9B(b-2) are a diagram of an interface according to an embodiment of this application;
FIG. 9C(a) to FIG. 9C(c) are a diagram of an interface according to an embodiment of this application;
FIG. 10A is a flowchart of a device control method according to an embodiment of this application;
FIG. 10B is a flowchart of a device control method according to an embodiment of this application;
FIG. 11A(a) to FIG. 11A(c) are a diagram of an interface according to an embodiment of this application;
FIG. 11B(a) to FIG. 11B(c) are a diagram of an interface according to an embodiment of this application;
FIG. 11C(a) and FIG. 11C(b) are a diagram of an interface according to an embodiment of this application;
FIG. 12A(a) and FIG. 12A(b) are a diagram of an interface according to an embodiment of this application;
FIG. 12B(a) to FIG. 12B(c) are a diagram of an interface according to an embodiment of this application;
FIG. 13 is a diagram of a device profile according to an embodiment of this application;
FIG. 14(a) and FIG. 14(b) are a diagram of an interface according to an embodiment of this application; and
FIG. 15 is a diagram of a structure of a device control apparatus according to an embodiment of this application.

### DESCRIPTION OF EMBODIMENTS

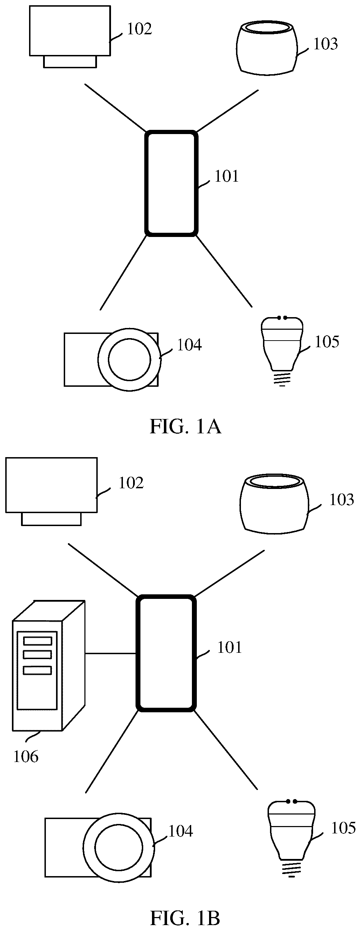

An embodiment of this application provides a device control method, applied to a system including a plurality of electronic devices. FIG. 1A is a diagram of an example of a system according to an embodiment of this application. Refer to FIG. 1A. The system includes a plurality of electronic devices (in FIG. 1A, electronic devices 101 to 105 are used as an example).

The plurality of electronic devices may establish a communication connection. Optionally, a manner of establishing a connection between devices includes but is not limited to one or more of the following: establishing a communication connection by scanning a QR code or a bar code, establishing a connection by using a communication protocol like a wireless fidelity (wireless fidelity, Wi-Fi) protocol or Bluetooth, and establishing a connection by using a nearby service (nearby service).

The electronic device 101 may be referred to as a first electronic device. The electronic device 102 to the electronic device 105 may be referred to as second electronic devices.

Optionally, the second electronic device may be a smart home device. Optionally, the smart home device may be a device having an Internet of things (Internet of things, IoT) function. In some examples, the first electronic device may perform local control or remote control on the second electronic device by using an IoT application. The second electronic device may report an event like a state change to the first electronic device.

For example, the second electronic device includes but is not limited to a television, a speaker, a smart light, a scanner, and the like. Optionally, the first electronic device may be a device like a mobile phone, a tablet computer, a laptop computer, a netbook, or a personal digital assistant (personal digital assistant, PDA). Specific forms of the first electronic device and the second electronic device are not specially limited in this embodiment of this application.

In some embodiments, the second electronic device may be controlled by using the first electronic device. For example, the mobile phone may be used to control a switch of the smart light, control the television to adjust a volume, and the like.

Optionally, as shown in FIG. 1B, a device control/management system in this embodiment of this application may further include a device management platform 106. The device management platform 106 is configured to provide a device configuration entry. A manufacturer of a smart home device may define and configure a function of the smart home device through the device configuration entry, to form a profile of the smart home device. The device management platform may send the profile of the device to the first electronic device 101. The profile includes information about one or more functions of the second electronic device. The first electronic device 101 may determine a display style of each control on a device control interface based on the profile of the device.

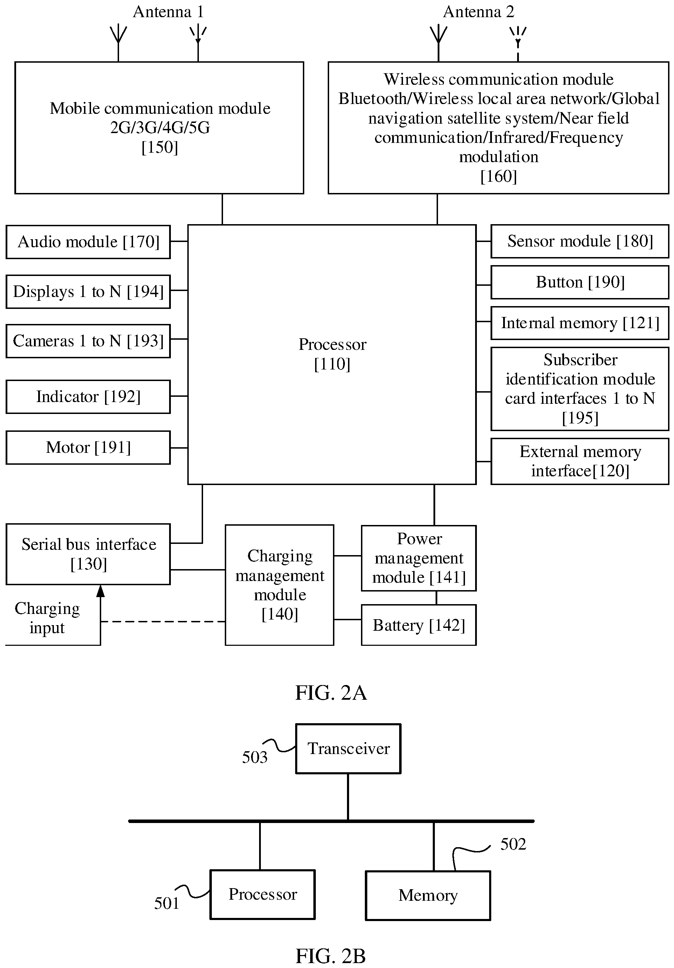

For example, the first electronic device is a mobile phone. FIG. 2A is a diagram of a structure of a first electronic device according to an embodiment of this application.

The first electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device. In some other embodiments of this application, the electronic device may include more or fewer components than those shown in the figure, or combine some components, or split some components, or have different component arrangements. The illustrated components may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the electronic device.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device. The processor 110 communicates with the display 194 through the DSIinterface, to implement a display function of the electronic device.

The USB interface 130 is an interface that conforms to a USB standard specification, and may be specifically a mini USB interface, a micro USB interface, a USB type-C interface, or the like. The USB interface 130 may be configured to connect to the charger to charge the electronic device, or may be used for data transmission between the electronic device and a peripheral device. It can also be used to connect to a headset and play audio through the headset. The interface may be further configured to connect to another electronic device like an AR device.

It may be understood that the interface connection relationship between the modules shown in this embodiment of this application is merely an example, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from the charger. The charger may be a wireless charger, or may be a wired charger. In some embodiments of wired charging, the charging management module 140 may receive charging input from the wired charger through the USB interface 130. In some wireless charging embodiments, the charging management module 140 may receive wireless charging input through a wireless charging coil of the electronic device. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device may be configured to cover one or more communication frequency bands. Different antennas may be further multiplexed to improve antenna utilization. For example, the antenna 1 may be multiplexed as a diversity antenna of a wireless local area network. In other embodiments, the antenna may be used in combination with a tuning switch.

The mobile communication module 150 may provide a solution to wireless communication such as 2G/3G/4G/5G applicable to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate the received electromagnetic wave signal into the low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal by using an audio device, or displays an image or a video through a display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution to wireless communication applicable to the electronic device, for example, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device implements a display function by using the GPU, the display 194, the application processor, and the like. The GPU is a microprocessor for image processing, and is connected to the display 194 and the application processor. The GPU is configured to perform mathematical and geometric calculations, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device may include one or N displays 194, where N is a positive integer greater than 1.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device may include one or N cameras 193, where N is a positive integer greater than 1.

The external memory interface 120 may be configured to connect to an external memory card, such as a micro SD card, to extend a storage capability of the electronic device. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and a phone book) created when the electronic device is used, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to execute various function applications of the electronic device and data processing.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110. The electronic device may use the audio module 170, for example, music playing or recording. The audio module 170 may include a loudspeaker, a receiver, a microphone, a headset interface, an application processor, and the like to implement an audio function.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button. It can also be a touch button. The electronic device may receive a key input, and generate a key signal input related to user setting and function control of the electronic device.

The motor 191 may generate a vibration prompt. The motor 191 may be configured to provide an incoming call vibration prompt and a touch vibration feedback. For example, touch operations performed on different applications (such as photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, a game) may also correspond to different vibration feedback effects. The touch vibration feedback effect can also be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or pulled out of the SIM card interface 195, to implement contact with or separation from the electronic device. The electronic device may support one or N SIM card interfaces, and N is a positive integer greater than 1.

For example, FIG. 2B is another example structure of a first electronic device. As shown in FIG. 2B, the first electronic device includes a processor 501, a memory 502, and a transceiver 503. For implementation of the processor 501 and the memory 502, refer to implementation of the processor and the memory of the first electronic device shown in FIG. 2A. The transceiver 503 is configured to interact between the first electronic device and another device. The transceiver 503 may be a device based on a communication protocol like Wi-Fi, Bluetooth, or another communication protocol.

In addition, for a structure of the second electronic device, refer to the structure of the first electronic device shown in FIG. 2B. Details are not described herein again.

FIG. 2A and FIG. 2B are merely possible examples of structures of the first electronic device and the second electronic device, and do not constitute a limitation on the structures of the first electronic device and the second electronic device.

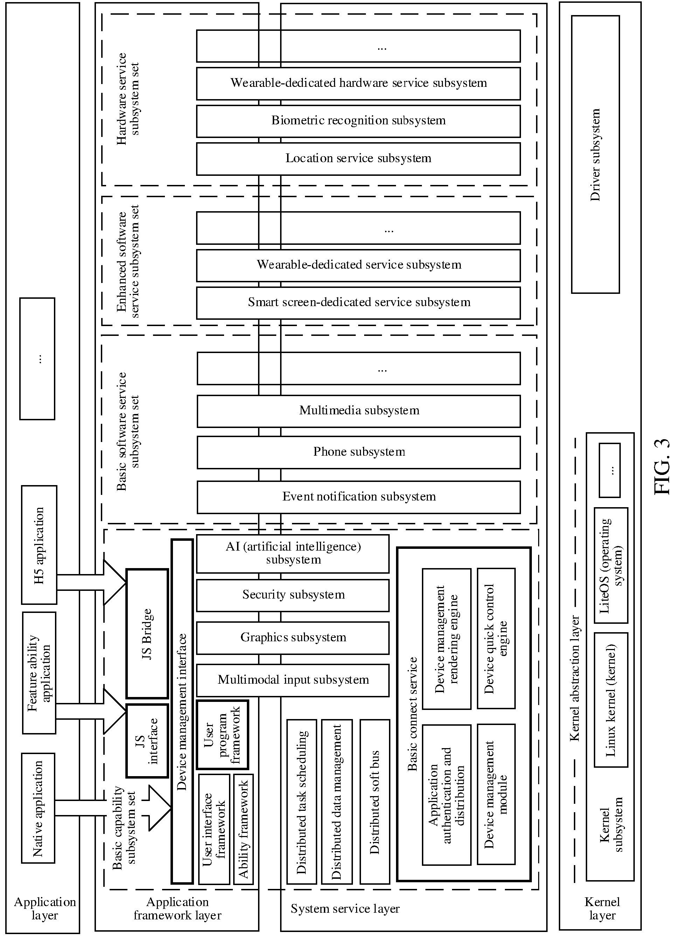

The first electronic device configured to control a smart home device may use any software architecture, for example, an Android^{®} architecture or a HarmonyOS architecture. A specific implementation of a software architecture of the first electronic device is not limited in this embodiment of this application. For example, FIG. 3 is an example software architecture of a first electronic device. The system may include four layers: an application layer (application layer for short), an application framework layer (framework layer for short), a system service layer, and a kernel layer (also referred to as a driver layer) from top to bottom.

The application layer may include a series of applications. In some embodiments of this application, the applications include but are not limited to a native (native) application, a feature ability (feature ability, FA, also referred to as a metaprogram) application, and an H5 application.

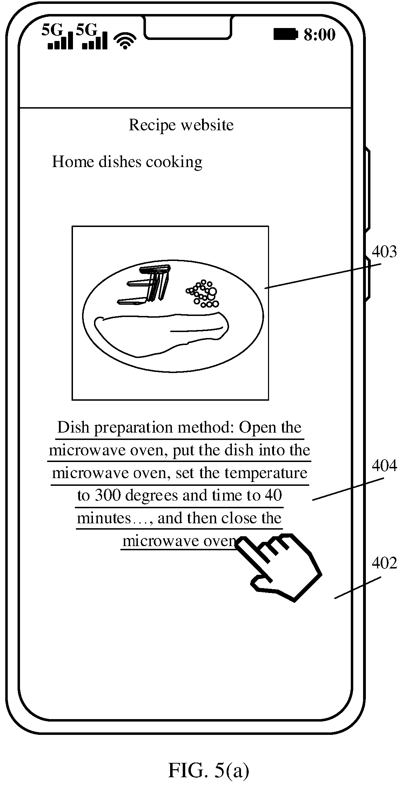

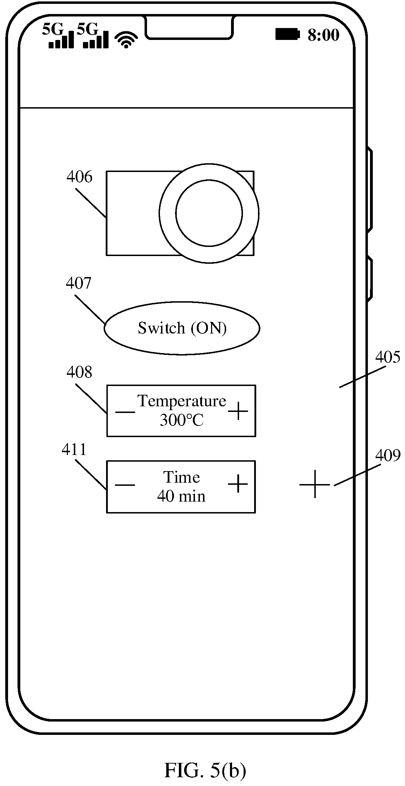

The native application may be an application that references a service card, a URL, or an application programming interface (application programming interface, API) by invoking a device management interface at the framework layer, to support a device management capability. In other words, after detecting that the native application invokes the device management interface, an electronic device may jump to a target interface (for example, an interface 405 shown in FIG. 5(a) and FIG. 5(b)) in a URL manner. Alternatively, after the native application invokes the device management interface, an electronic device may jump to a target interface in an API manner. Alternatively, after the native application invokes the device management interface, an electronic device may jump to a target interface in a service card manner.

Optionally, in some embodiments of this application, an application may be atomized. Specifically, the application may include one or more abilities (abilities, also referred to as atomic abilities, or the like). The ability includes but is not limited to the FA and an atomic ability (atomic ability, AA, also referred to as an atomic service). The FA provides a UI for interacting with a user. The AA has no UI and provides background task processing and unified data access abstraction. The FA and the AA may have other names. This is not limited in embodiments of this application. An FA-based application (FA application for short) can reference the URL, the API, and the service card through a JS interface.

The H5 application may be an application loaded through a Web View container. The H5 application may reference the URL, the API, and the service card through a JS API of JS Bridge.

The application framework layer may provide an API and a programming framework for an application at the application layer, for example, provide a user interface (UI) frame, an ability (ability) framework, and a user program frame.

In some embodiments of this application, the framework layer provides a device management interface. The native application can invoke the device management interface, to trigger the electronic device to jump to a target interface in a URL manner. Alternatively, the native application invokes the device management interface, to trigger the electronic device to jump to a target interface in an API manner. Alternatively, the native application invokes the device management interface, to trigger the electronic device to jump to a target interface in a service card manner.

In some embodiments of this application, the framework layer further provides the JS interface. The FA application can invoke the JS interface, to trigger the electronic device to jump to a target interface in a URL manner. Alternatively, the FA application invokes the JS interface, to trigger the electronic device to jump to a target interface in an API manner. Alternatively, the FA application invokes the JS interface, to trigger the electronic device to jump to a target interface in a service card manner.

In some embodiments of this application, the framework layer further provides a JS Bridge interface. The H5 application can invoke the JS Bridge interface, to trigger the electronic device to jump to a target interface in a URL manner. Alternatively, the H5 application invokes the JS Bridge interface, to trigger the electronic device to jump to a target interface in an API manner. Alternatively, the H5 application invokes the JS Bridge interface, to trigger the electronic device to jump to a target interface in a service card manner.

In some embodiments of this application, after an application (for example, the H5 application) detects an operation of tapping a first hyperlink (associated with a target device) by a user, the application may invoke a corresponding interface (for example, the JS Bridge interface) to send an instruction to the user program framework at the framework layer. After receiving the instruction, the user program framework determines that the user taps the first hyperlink, and may control the electronic device to jump to the target interface (for example, the interface 405 shown in FIG. 5(a) and FIG. 5(b)) used to control the target device.

In the foregoing solution, through a system-level interface (for example, a framework layer interface), an application may be supported in integrating the device management capability in a hyperlink manner, so that the user can control a smart home device by tapping the hyperlink on an application interface. In this way, device management experience that is insensible, immersive, visible, and controllable can be achieved, so that the user does not need to find, from various types of applications on a desktop, a target application (for example, an AI Life application) specially used to control the smart home device. This improves efficiency of managing smart home devices.

The system service layer is a core capability set of a system and provides a service for an application through the framework layer. The layer includes the following parts.

System basic capability subsystem set: provides a basic capability for running, scheduling, and migration of a distributed application on a plurality of devices, and includes subsystems such as distributed soft bus, distributed data management, distributed task scheduling, Ark multi-language runtime, common basic library, multimodal input, graphics, security, and AI.

The distributed soft bus is a logical channel that can be used for communication between devices.

Basic software service subsystem set: provides a common software service for the system, and includes subsystems such as event notification, phone, multimedia, DFX, and MSDP&DV.

Enhanced software service subsystem set: provides differentiated enhanced software services for different devices, and includes a smart screen-dedicated service subsystem, a wearable-dedicated service subsystem, an loT-dedicated service subsystem, and the like.

Hardware service subsystem set: provides hardware services, and includes a location service subsystem, a biometric recognition subsystem, a wearable-dedicated hardware service subsystem, an IoT-dedicated hardware service subsystem, and the like.

Based on deployment environments of different device forms, the basic software service subsystem set, enhanced software service subsystem set, and hardware service subsystem set can be modified by subsystems, and each subsystem can be modified by functions.

In some embodiments of this application, the system service layer further includes a basic connect (connect) service. The basic connect service can be used to provide a system-level open capability and support various types of applications to integrate device management capabilities in a hyperlink manner, a service card manner, or another manner. The basic connect service can provide a device access interface, a URL hyperlink jump interface, a device capability card integration interface, and the like externally and support system-level quick control.

For example, as shown in FIG. 3, the basic connect service includes an application authentication and distribution module, a device management rendering engine, a device management module, and a device quick control engine.

The application authentication and distribution module may be configured to authenticate an application.

Optionally, the authenticating an application includes but is not limited to: verifying validity of a signature of an application and application permission.

In some embodiments of this application, the application authentication and distribution module may alternatively be configured to: identify a device management manner of an application, and invoke a corresponding module for processing based on the device management manner of the application.

For an application that performs device management in a hyperlink manner, the application authentication and distribution module invokes the device management module and the device management rendering engine to render a layout of a device control interface.

In a possible implementation, the application authentication and distribution module invokes the device management module to obtain information about the target device (for example, a microwave oven) only when an authentication succeeds. In this way, an illegal application may be prevented from obtaining the information about the target device, to prevent the illegal application from controlling the target device by obtaining the information about the target device.

For an application that manages devices in an API or a service card manner, the application authentication and distribution module invokes the device quick control engine. The device quick control engine performs near-field or far-field device control based on device information recorded in the device management module, and receives and feeds back a device status after the control.

The device management module may be configured to maintain information about each second electronic device (for example, a smart home device).

The device management rendering engine may be configured to perform layout rendering on the device control interface.

In a possible implementation, the device management rendering engine may be encapsulated as a service, and the application can obtain, from the basic connect service through an interface like Java, JS, or WebView, a control component (or a control) corresponding to a device function.

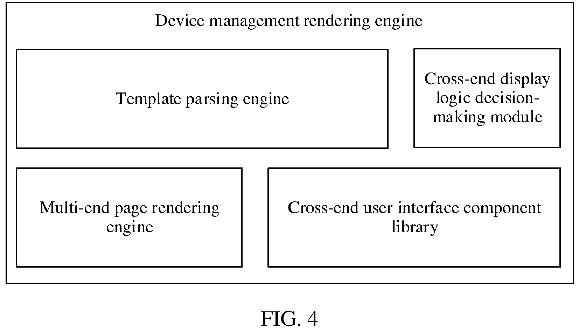

Optionally, as shown in FIG. 4, the device management rendering engine includes the following modules.

A template parsing engine is configured to parse and obtain product definition information and function definition (ServiceType, or referred to as service type) information. The function definition information includes information about each function of a product and information about a user interface (user interface, UI) component corresponding to a corresponding function. UI effects of a same function on different types of displays can be different.

Optionally, a UI effect corresponding to a function includes but is not limited to a UI component corresponding to the function and a layout manner of the UI component.

Optionally, the product definition information may be defining information in a product profile (profile).

Optionally, the function definition information is defined by a device manufacturer in a development and delivery phase. For example, for a camera, a speaker, and a light that need to be connected to a mobile phone, manufacturers of the camera, the speaker, and the light define function definition information of respective devices.

For example, Table 1 is an example of function definition information configured in an electronic device (for example, a terminal).

**Table 1**

| ServiceType | Description | Display style | Display size | UI component style | Quick control | Layout template |
|---|---|---|---|---|---|---|
| Switch | Switch | Square | Ultra-large size (for example, a large screen) | Move focus button | Yes | LayoutTvButton |
| | | | Large size (for example, a tablet or a panel) | (Ellipsoid) Round button | | LayoutButton |
| | | | Medium size (mobile phone) | (Ellipsoid) round button | | |
| | | | Lite (smart meter) | Square button | | LayoutLiteButton |
| | | | ... | ... | | |
| | | Irregular shape | Lite | (Ellipsoid) round button | | LayoutLiteCircuB utton |
| | | ... | ... | ... | ... | ... |
| Lightness | Light adjustment | Square | ... | ... | ... | ... |
| | | | Ultra-large size | INCREASE_ DECREASE component | ... | ... |
| | | | Large size | Horizontal slider bar | ... | ... |
| | | | Medium size | Horizontal slider bar | | |
| | | | Lite | Vertical slider bar | ... | ... |
| | | Irregular shape | Lite | Ring slider bar | ... | ... |
| | | ... | ... | ... | ... | ... |
| ColorTemp | Color temperature | ... | ... | ... | ... | ... |
| Temp | Temperature | ... | ... | ... | ... | ... |
| ChildLock | Child lock | ... | ... | ... | ... | ... |
| screenSwitch | Screen on | ... | ... | ... | ... | ... |
| windSpeed | Wind speed | ... | ... | ... | ... | ... |
| ... | ... | ... | ... | ... | ... | ... |

For example, in a factory definition phase, each device manufacturer may define a function (ServiceType) field like that shown in Table 1, for example, define a switch. Subsequently, in a connection phase, that is, when the mobile phone establishes a connection to a smart home device (for example, a smart light), the mobile phone needs to obtain function definition information of the smart light, and determine, based on information such as the function definition information and a screen of the mobile phone, a specific UI style corresponding to a corresponding function.

Optionally, a type of a display is related to any one or more of the following parameters: a size of the display, a style of the display, and an interaction manner of the display.

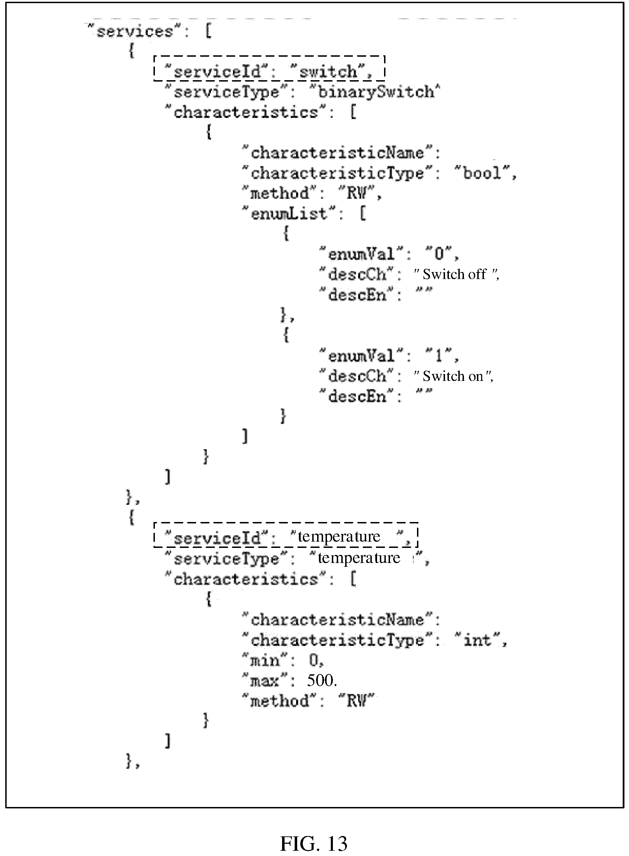

For example, FIG. 13 is a profile of a microwave oven. A template parsing engine parses the profile, and learns that functions of the microwave oven include a switch (switch) function and a temperature (temperature) adjustment function.

A cross-end display logic decision-making module is configured to: obtain information about a display, and determine, based on the information about the display and a parsing result of the template parsing engine, a component of a corresponding function adapted to the display. Optionally, the cross-end display logic decision-making module may further determine a rendering mode of a device control interface, for example, whether to display a specific function and a UI component conversion relationship.

Optionally, the information about the display includes any one or more pieces of the following information: a size of the display, a style of the display, and an interaction manner of the display.

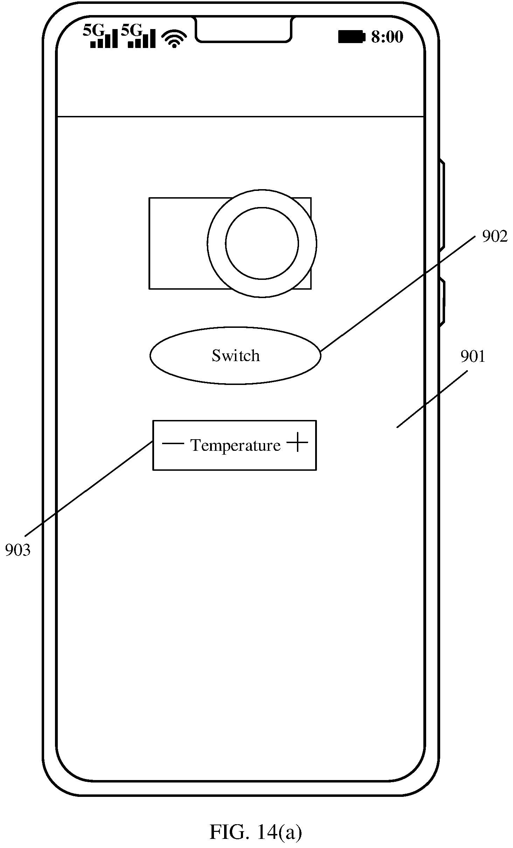

For example, if an electronic device that currently needs to display a control interface of the microwave oven is a mobile phone, the mobile phone may obtain the parsing result from the template parsing engine, to learn that functions of the microwave oven including the switch function and the temperature adjustment function. The mobile phone may alternatively determine, through the cross-end display logic decision-making module, that a display of the mobile phone is a square and medium-size display. Then, the mobile phone may query, through the cross-end display logic decision-making module, function definition information shown in Table 1, and may learn, by querying the function definition information shown in Table 1, a component of a switch function and a component of a temperature adjustment function that are adapted to a square and medium-size display. In an example, as shown in FIG. 14(a), when displaying a control interface 901 of the microwave oven, the mobile phone may display an (ellipsoid) round switch button 902 and a horizontal temperature adjustment control 903 on the interface 901.

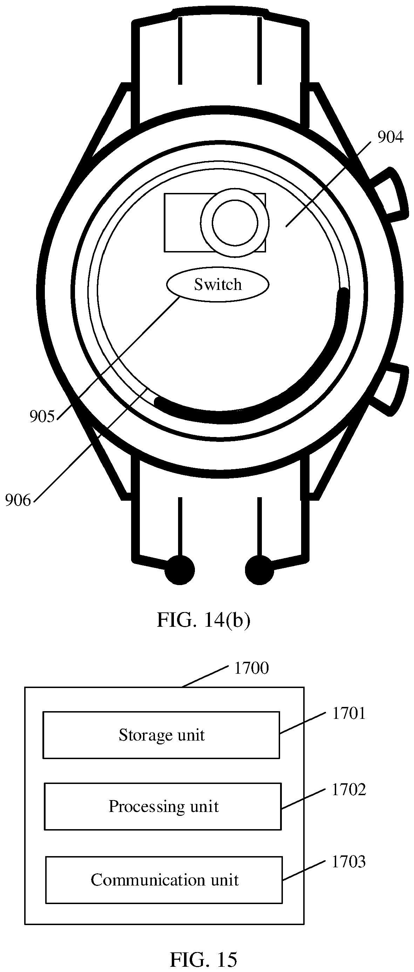

For another example, if an electronic device that currently needs to display a control interface of the microwave oven is a wearable device (for example, a watch), the watch may determine, through the cross-end display logic decision-making module, that a display of the watch is a Lite display of an irregular shape. Then, the watch may query, through the cross-end display logic decision-making module, function definition information shown in Table 1, and may learn, by querying the function definition information shown in Table 1, a component of a switch function and a component of a temperature adjustment function that are adapted to the Lite display of an irregular shape. In an example, as shown in FIG. 14(b), when displaying a control interface 904 of the microwave oven, the watch may adaptively display an elliptical switch control 905 and a ring temperature adjustment control 906 on the interface 904.

A multi-end page rendering engine is configured to: obtain, based on an output result of the cross-end display logic decision-making module, a target UI component and a layout template of a corresponding UI interface from a UI component library, and render the UI interface based on the target UI component and the layout template. The UI interface includes the target UI component.

Optionally, interface rendering may be performing rendering in a selection response mode, or performing rendering in a waterfall dynamic layout mode, or performing rendering in another mode.

A cross-end UI component library is configured to maintain a standard UI component library, for example, upgrading, updating, loading, and disabling a UI component, and updating, loading, and disabling a corresponding cross-end template. The cross-end template includes a layout template of the UI component and/or a layout template of an interface.

In some embodiments of this application, after an application (for example, the H5 application) detects an operation of tapping a first hyperlink (associated with a target device) by a user, the application may invoke a corresponding interface (for example, the JS Bridge interface) to send an instruction to a user program framework at the framework layer. After receiving the instruction, the user program framework forwards the instruction to a basic connect service at a service layer. After receiving the instruction, the basic connect service determines that the user taps the first hyperlink, and the basic connect service may obtain a profile of a target device (for example, the microwave oven). The profile of the target device may be obtained by a first electronic device 101 in advance from a device management platform 106, or may be obtained by a first electronic device 101 from a device management platform 106 in real time.

After the profile (for example, the profile shown in FIG. 13) of the target device is obtained, the basic connect service determines a target function (for example, a switch function or a temperature control function) of the target device, and queries Table 1, to determine a UI component style that adapts to the target function under a display parameter (including a display size and a display style) of the first electronic device 101.

A kernel layer includes a kernel subsystem and a driver subsystem.

The kernel subsystem adopts a multi-kernel design. A kernel abstraction layer (kernel abstraction layer, KAL) shields differences between a plurality of kernels and provides a basic kernel capability for an upper layer, including process/thread management, memory management, file system management, network management, peripheral management, and the like.

The driver subsystem provides a unified peripheral access capability and a driver development and management framework.

FIG. 3 is merely a possible example of a software architecture of the first electronic device, and does not constitute a limitation on the software architecture of the first electronic device.

The device control method provided in embodiments of this application may be applied to a scenario like a smart home. First, the device control method in embodiments of this application is described by using an example in which a microwave oven is controlled by using a mobile phone.

For example, the mobile phone enters an interface 402 of a recipe website in a browser shown in FIG. 5(a). The interface 402 includes an object for which a hyperlink is set, namely, a text 404 of a recipe. Optionally, the interface 402 further includes a picture 403 of a dish in the recipe.

In some embodiments, after detecting that the user taps the hyperlink 404, the mobile phone may jump to a target interface (for example, a control interface of the target device) associated with the target device. The target device is a device associated with the hyperlink. For example, if the hyperlink 404 shown in FIG. 5(a) is a hyperlink set or created for a text, and the text includes a keyword "microwave oven", a device associated with the hyperlink 404 is the microwave oven. After detecting an operation of tapping the hyperlink 404 (associated with the microwave oven) by the user, the mobile phone may jump to the control interface of the microwave oven, so that the user controls the microwave oven through the control interface of the microwave oven.

In a possible implementation, the hyperlink 404 shown in FIG. 5(a) is set as follows:
hilink://smarthome...?...&devType=Weibolu&......& temp=300&...time=40

Herein, smarthome indicates a target application to which a target interface jumped after a hyperlink is tapped belongs. For example, if the mobile phone is triggered to jump to an interface of an AI Life application after the hyperlink is tapped, the application to which the target interface belongs is the AI Life application.

devId indicates an identifier of the target device that is associated with the target interface. For example, after the hyperlink is tapped, the mobile phone is triggered to jump to the control interface of the microwave oven of the AI Life application. The target interface is the control interface of the microwave oven, and the target device associated with the target interface is the microwave oven.

Optionally, the hyperlink may further include other parameter information. For example, the hyperlink may further include a parameter temp, where the parameter is a related parameter of a temperature control function of the device. For another example, the hyperlink may further include a parameter time, where the parameter is a related parameter of working time of the device.

In a possible implementation, when the user browses, through the browser, the interface 402 shown in FIG. 5(a), if the browser detects the operation of tapping the hyperlink 404 by the user, the browser sends an instruction to the user program framework at the framework layer, and the user program framework controls, based on information about a target application (the AI Life application) and a target device (the microwave oven) in the hyperlink shown in hilink://smarthome.y.com?...&devType=Weibolu&... & temp:300 &... time=40, the mobile phone to jump to the control interface 405 of the microwave oven shown in FIG. 5(b).

The interface 405 may include a related control used to control the microwave oven. A related parameter of a corresponding controlling control of the microwave oven is controlled by a hyperlink.

For example, the interface 405 may include a temperature controlling control 408 that is used to set a heating temperature and that is involved in the hyperlink. In an example, as shown in FIG. 5(a), content of the hyperlink includes "Set the temperature to 300 degrees", and therefore, a temperature corresponding to the temperature controlling control 408 is set to 300 degrees.

For another example, the interface 405 may include a control 411 configured to control working time of the microwave oven. In an example, as shown in FIG. 5(a), content of the hyperlink includes "Time 40 min", and therefore, working time corresponding to the control 411 is set to 40 min.

For another example, the interface 405 may include a switch function option 407 that is used to switch on or switch off the microwave oven and that is involved in the hyperlink.

In some examples, as shown in FIG. 5(a), content of the hyperlink includes "Open the microwave oven". In this case, a state of the switch control 407 is set to an on state. In other words, after detecting the operation of tapping the hyperlink 404 by the user shown in FIG. 5(a), the mobile phone may intelligently and automatically control the microwave oven to be turned on, and prompt, by using a display style of the switch control 407 on the interface 405 shown in FIG. 5(b), the user that the microwave oven is turned on. In addition, parameters of the temperature and the working time after the microwave oven is turned on are set based on the hyperlink.

Optionally, the interface 405 may further include another function option of the microwave oven.

Optionally, the interface 405 may further include an example icon 406 of the microwave oven.

Optionally, for a function option that is not displayed on the interface 405, the interface 405 may further include a control 409, configured to jump to the function option that is not displayed. For example, in response to tapping the control 409 by the user, the mobile phone may jump to a detailed function menu of the microwave oven. The detailed function menu includes but is not limited to other function options such as a dish type and a heat level.

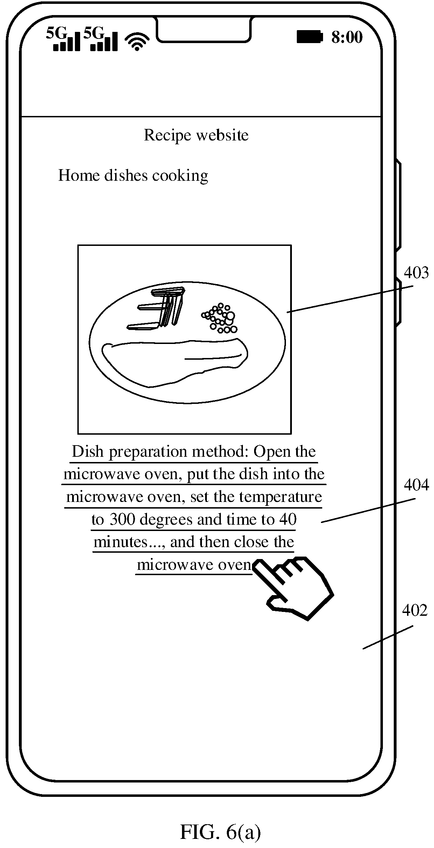

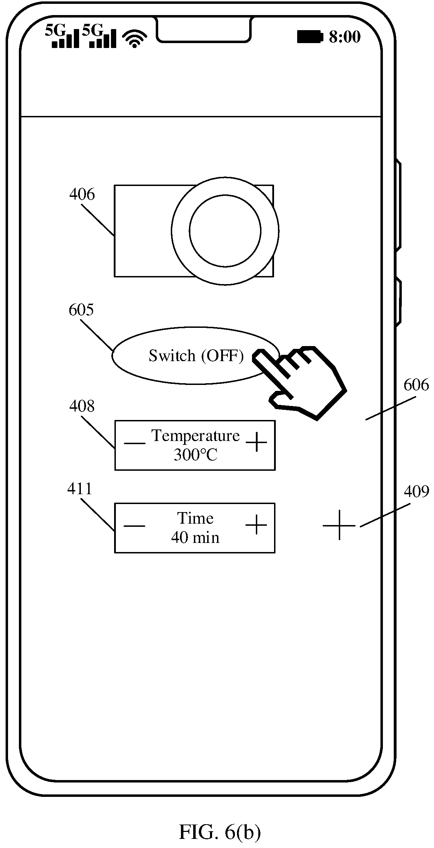

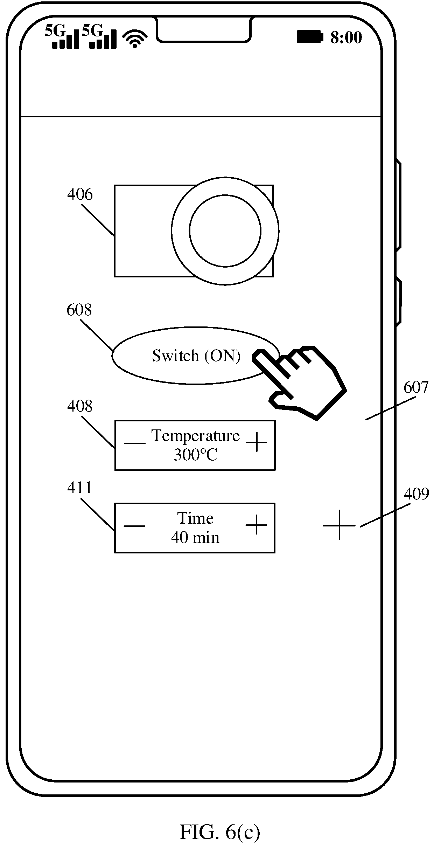

Alternatively, in some other examples, to avoid a problem that the user performs a misoperation on the microwave oven due to an accidental touch of the hyperlink 404, a state of a switch control used to control the microwave oven to be turned on or turned off may not be controlled by the hyperlink. For example, as shown in FIG. 6(a), after detecting the operation of tapping the hyperlink 404 by the user, the mobile phone may jump to an interface 606 shown in FIG. 6(b). The interface 606 includes a switch control 605, and a state of the switch control 605 is an off state (namely, off state). Then, as shown in FIG. 6(b), after detecting an operation of tapping the switch control 605 (an operation of indicating to switch on the microwave oven) by the user, the mobile phone controls the microwave oven to start, and may jump to an interface 607 shown in FIG. 6(c). The interface 607 includes a switch control 608, and a state of the switch control 608 is an on state, and is used to prompt the user that the microwave oven is started. In addition, parameters such as the temperature and the working time after the microwave oven starts are set based on the hyperlink 404.

In this solution, a hyperlink is set for an object like a text, so that a device control function may be integrated into the hyperlink in a URL manner. Therefore, when the user taps the hyperlink, the first electronic device may present an interface for device control in time, so that the user does not need to waste time in searching for a target application for implementing device control in various applications on a desktop. That is, the user may conveniently and quickly call, through an interface currently displayed on the first electronic device, a device control interface associated with the current interface (for example, a recipe making interface). In this way, time required for device control can be reduced, and device control efficiency can be improved. In addition, control parameters corresponding to some controls on the foregoing device control interface are automatically set based on the hyperlink, and the user does not need to manually adjust the control parameters corresponding to the controls. This greatly simplifies a device control operation procedure of the user, and further improves device control efficiency.

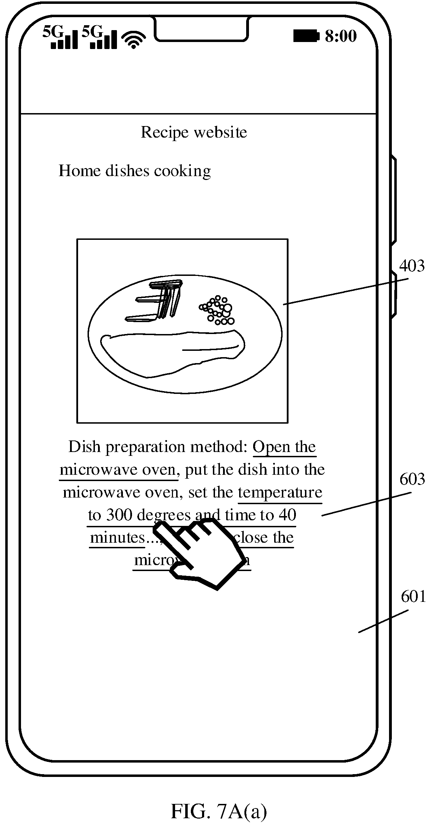

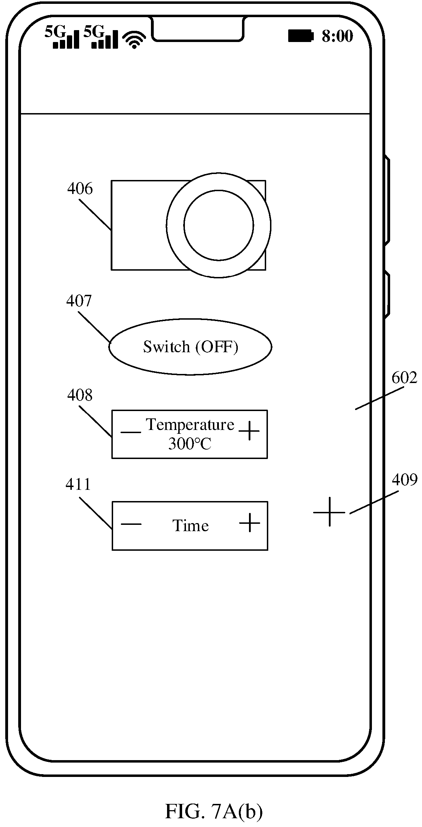

The foregoing mainly uses an example in which a hyperlink is set for the entire text is used for description. In some other embodiments, hyperlinks may be set for different objects on the interface separately. A plurality of control parameters corresponding to a plurality of hyperlinks can set separately. For example, as shown in FIG. 7A(a), the mobile phone displays an interface 601, and the interface 601 includes a piece of text 603. In the text, hyperlinks are set for "Open the microwave oven", "Set the temperature to 300 degrees", and "Time 40 min". After it is detected that the user taps the hyperlink of "Set the temperature to 300 degrees" in the text 603, the mobile phone may jump to a control interface 602 of the microwave oven shown in FIG. 7A(b). The interface 602 may include a temperature controlling control 408. In some examples, the mobile phone may set, based on the hyperlink corresponding to "Set the temperature to 300 degrees" in the text 603 shown in FIG. 7A(a), a control parameter (namely, a temperature) corresponding to the temperature controlling control 408 to 300 degrees.

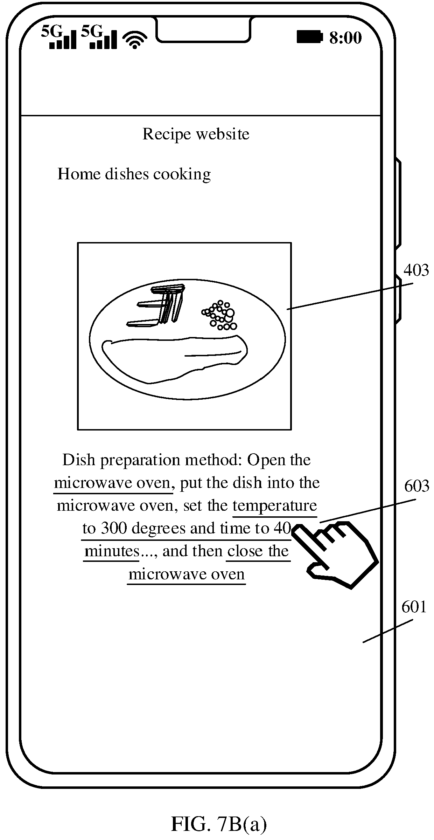

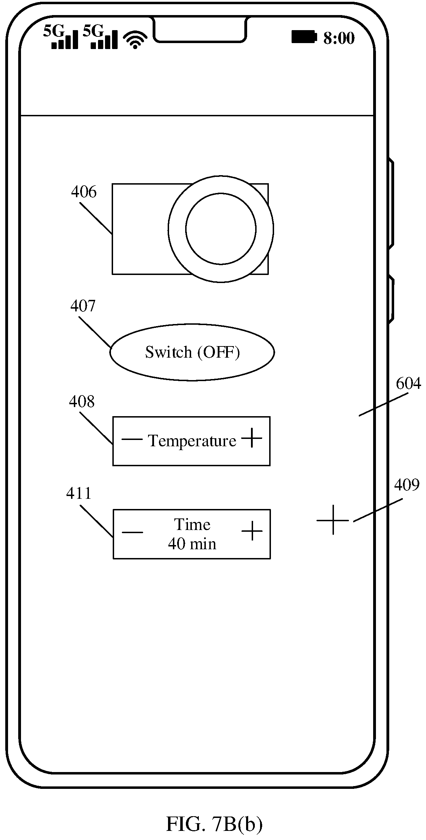

For another example, as shown in FIG. 7B(a), after it is detected that the user taps a hyperlink of "Time 40 min" in the text 603, the mobile phone may jump to an interface 604 shown in FIG. 7B(b). The interface 604 may include a time controlling control 411. In some examples, the mobile phone may set a control parameter (for example, working time) corresponding to the time controlling control 411 to 40 minutes based on the hyperlink of the text "Time 40 min" shown in FIG. 7B(a).

In the foregoing example, in response to tap operations of the user on the plurality of hyperlinks, a plurality of control parameters corresponding to the plurality of hyperlinks are separately set. In some other embodiments, when the plurality of hyperlinks exist on the interface, the plurality of parameters corresponding to the plurality of hyperlinks may be set uniformly.

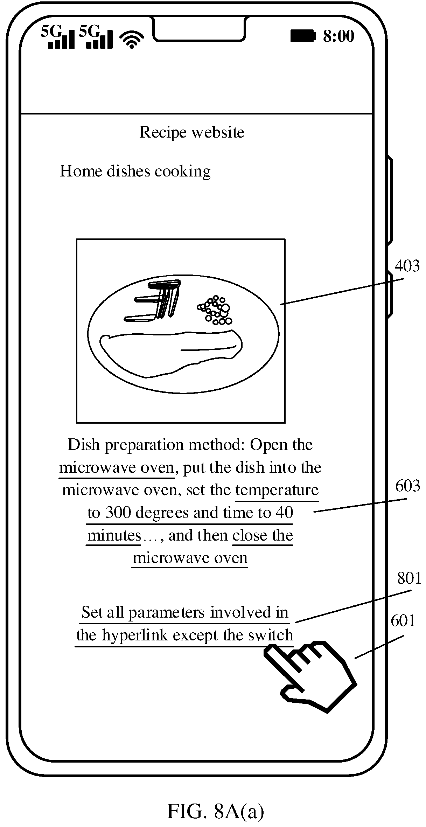

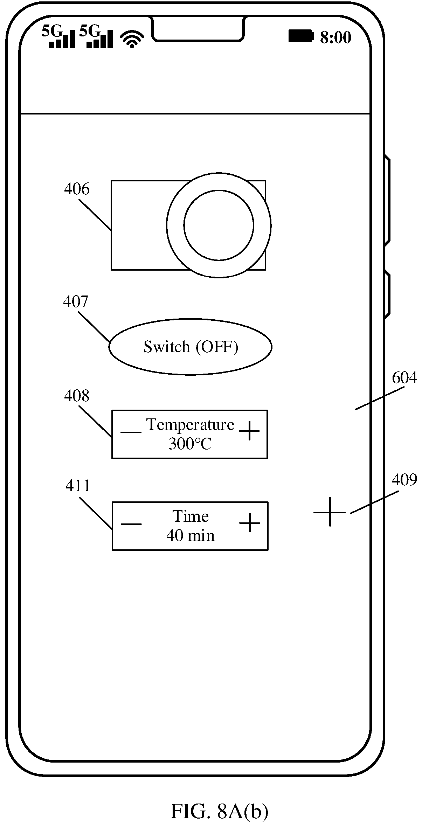

In some examples, for example, as shown in FIG. 8A(a), a recipe interface 601 browsed by the user includes a piece of text 603. The text 603 includes a plurality of hyperlinks, and the plurality of hyperlinks correspond to a plurality of control parameters of the microwave oven. For example, in the text 603, "Set the temperature to 300 degrees" corresponds to a temperature control parameter of the microwave oven, and "Time 40 min" corresponds to a control parameter: working time, of the microwave oven. The interface 601 further includes a hyperlink 801, where the hyperlink 801 may correspond to all control parameters of the microwave oven except a switch involved in the hyperlink 603. For example, the hyperlink 801 may correspond to a temperature control parameter and a working time control parameter of the microwave oven.

As shown in FIG. 8A(a), in response to an operation of tapping the hyperlink 801 by the user, the mobile phone may jump to an interface 604 shown in FIG. 8A(b). The interface 604 includes a temperature control 408, a time control 411, and a switch control 407. A temperature control parameter (300 degrees) of the temperature control 408 is set based on the hyperlink 801, and a time control parameter (40 min) of the time control 411 is set based on the hyperlink 801. A state of the switch control 407 is not controlled by the hyperlink 801.

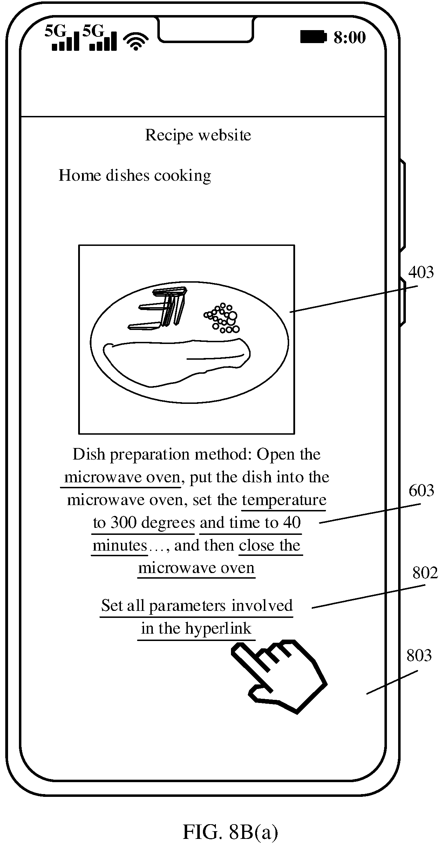

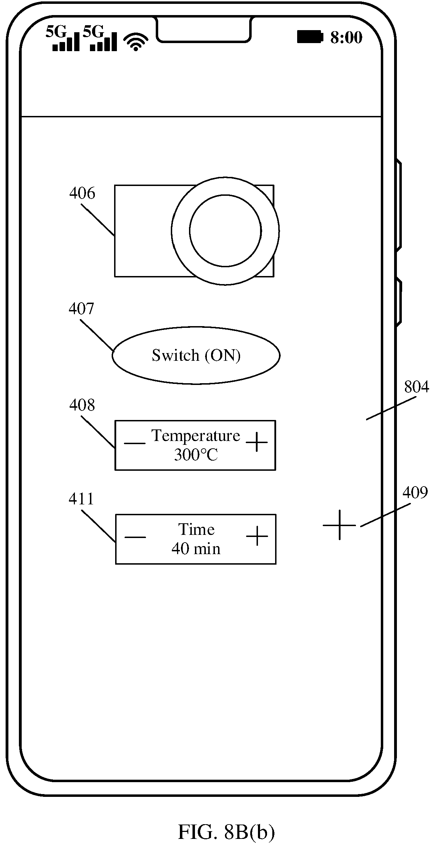

Alternatively, in some other examples, for example, as shown in FIG. 8B(a), a recipe interface 803 browsed by the user includes a piece of text 603. The text 603 includes a plurality of hyperlinks, and the plurality of hyperlinks correspond to a plurality of control parameters of the microwave oven. The interface 803 further includes a hyperlink 802. The hyperlink 802 may correspond to all control parameters (including an on/off state of a switch) of the microwave oven involved in the hyperlink 603. For example, the hyperlink 802 may correspond to a temperature control parameter, a working time control parameter, and an on/off state of the switch of the microwave oven.

As shown in FIG. 8B(a), in response to an operation of tapping the hyperlink 802 by the user, the mobile phone may jump to an interface 804 shown in FIG. 8B(b). The interface 804 includes a temperature control 408, a time control 411, and a switch control 407. A temperature control parameter (300 degrees) of the temperature control 408 is set based on the hyperlink 801, and a time control parameter (40 min) of the time control 411 is set based on the hyperlink 801. A state (on) of the switch control 407 is set based on the hyperlink 801.

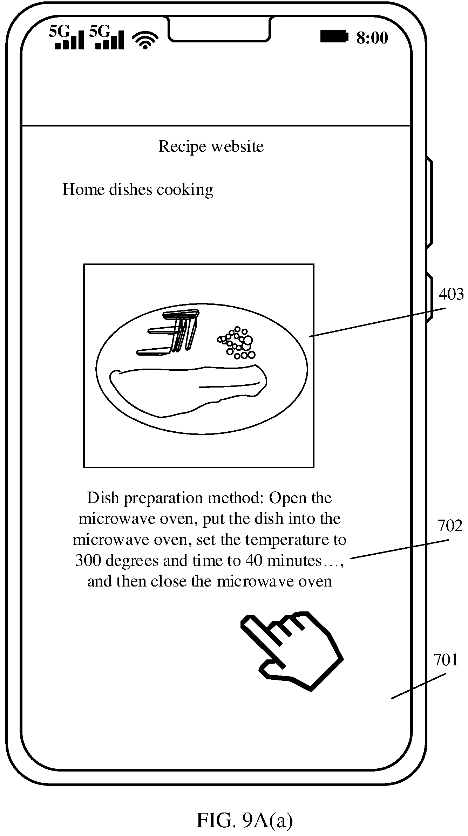

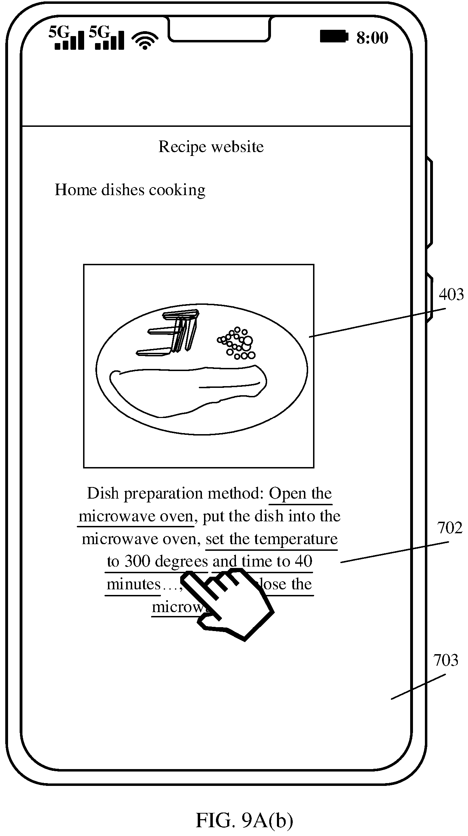

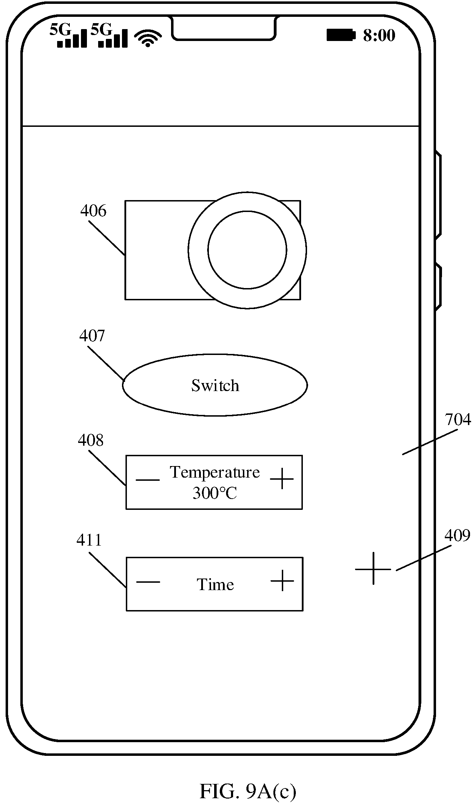

In some embodiments, the hyperlink may be preset. In some other embodiments, the hyperlink may alternatively be set by a first electronic device when the user uses the first electronic device. For example, as shown in FIG. 9A(a), the user browses an interface 701 through a browser, and the interface 701 includes a text 702. The mobile phone determines, through semantic identification, that the text 702 includes content related to control of a second electronic device, for example, includes target keywords such as "Open the microwave oven", "Set the temperature to 300 degrees", "Time 40 min", and "Close the microwave oven".

In some examples, after detecting that the text 702 includes the target keyword, the mobile phone may set a hyperlink for the target keyword. As shown in FIG. 9A(b), the mobile phone displays an interface 703, where the interface 703 includes a hyperlink of the target keyword in the text 702. The user can tap the hyperlink of the target keyword to trigger the mobile phone to set a control parameter and a status of the microwave oven. For example, as shown in FIG. 9A(b), it is detected that the user taps a hyperlink of a text "Set the temperature to 300 degrees", and the mobile phone jumps to an interface 704 shown in FIG. 9A(c). A control parameter (namely, a temperature) of a temperature controlling control 408 on the interface 704 is set to 300 degrees.

Alternatively, in some other examples, after detecting that the text 702 includes the target keyword, the mobile phone may set a hyperlink for the entire text 702. A manner of setting a hyperlink and a format of the specified hyperlink are not limited in this embodiment of this application.

In some embodiments, after detecting a target operation entered by the user, the first electronic device may determine that the user expects to control the second electronic device, and perform semantic identification on a current interface displayed by the first electronic device. In this way, semantic identification may be performed based on the device control intention of the user. When the device control intention of the user is not detected (that is, the target operation is not detected), the semantic identification is not performed, so that a frequency of semantic identification can be reduced, and computing power consumption of the first electronic device is further reduced.

The target operation is any operation that can indicate a device control intention of the user. Optionally, the target operation may be set by the user or the first electronic device. For example, the target operation may be an operation of lifting the first electronic device, an operation of double-tapping the back of the first electronic device, or the like.

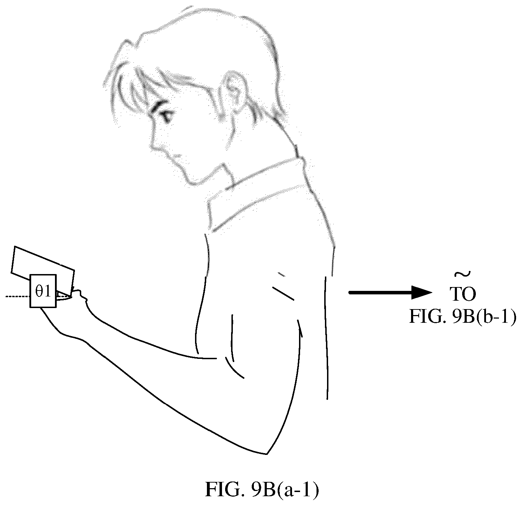

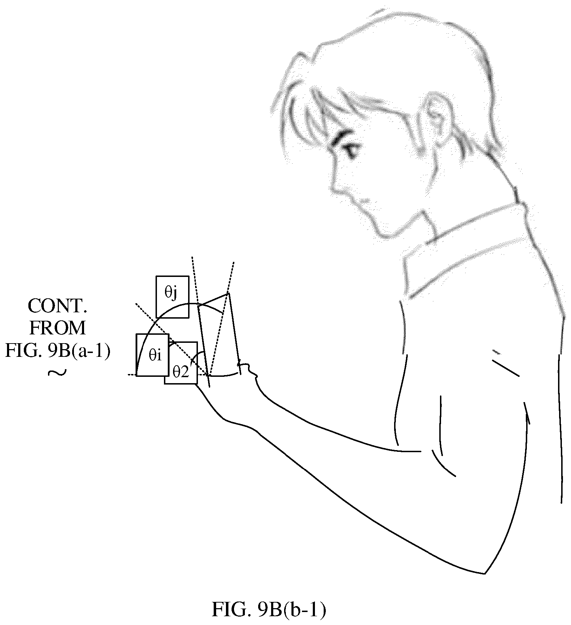

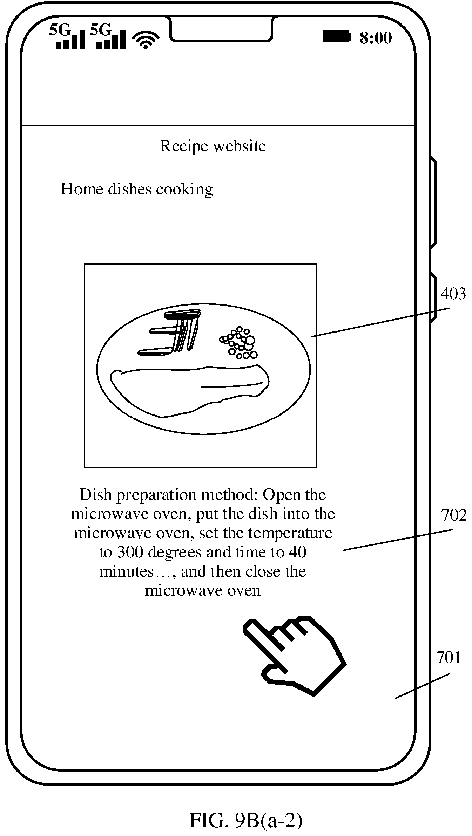

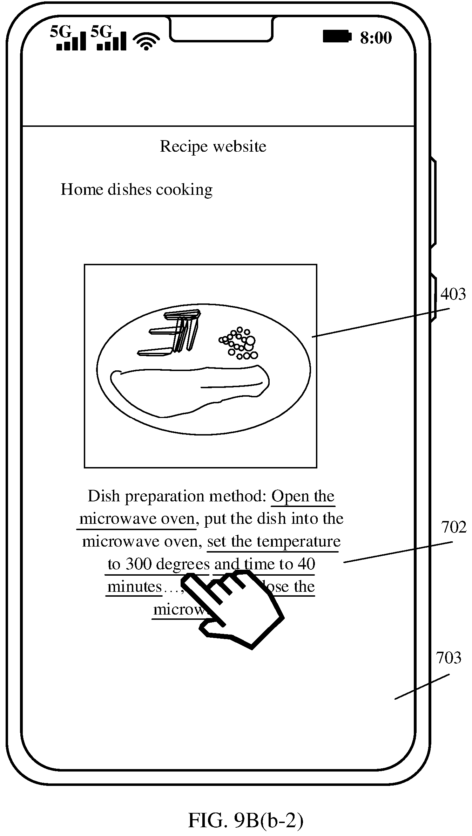

It is assumed that the target operation is the operation of lifting the mobile phone. For example, as shown in FIG. 9B(a-1), the user holds the mobile phone to watch a recipe interface 701 shown in FIG. 9B(a-2). Then, as shown in FIG. 9B(b-1), the user lifts the mobile phone, and the mobile phone determines that the user probably expects to control a smart home device. In this case, the mobile phone performs semantic identification on the current interface 701, and determines, through the semantic identification, that the text 702 on the interface 701 is related to the microwave oven. The mobile phone may set a hyperlink for a keyword (for example, "Open the microwave oven" or "Set the temperature to 300 degrees") in the text 702, and may display a hyperlink set for the text 702 shown on the interface 703 in FIG. 9B(b-2). In this solution, the user may trigger the electronic device to set a hyperlink on the current interface by performing a simple target operation, so that the user can directly control a target device by using the hyperlink on the current interface, and does not need to control the target device by using a dedicated device control interface.

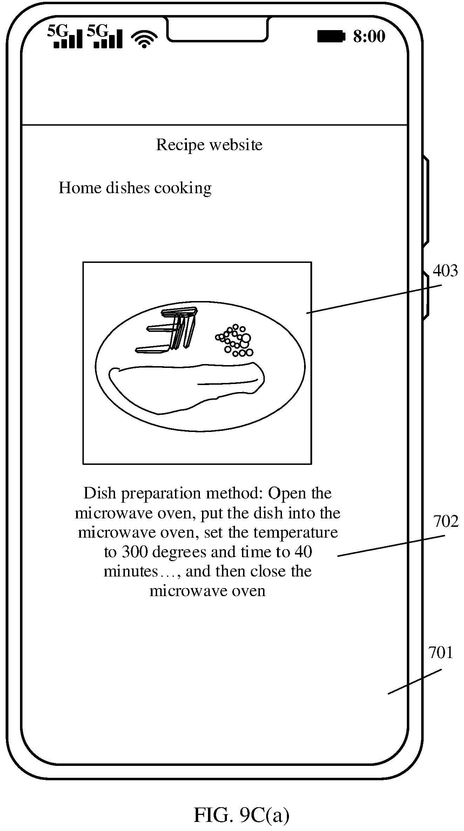

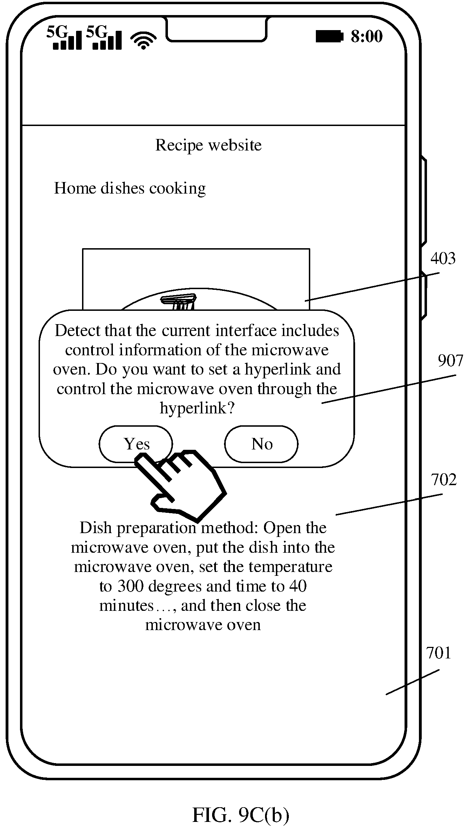

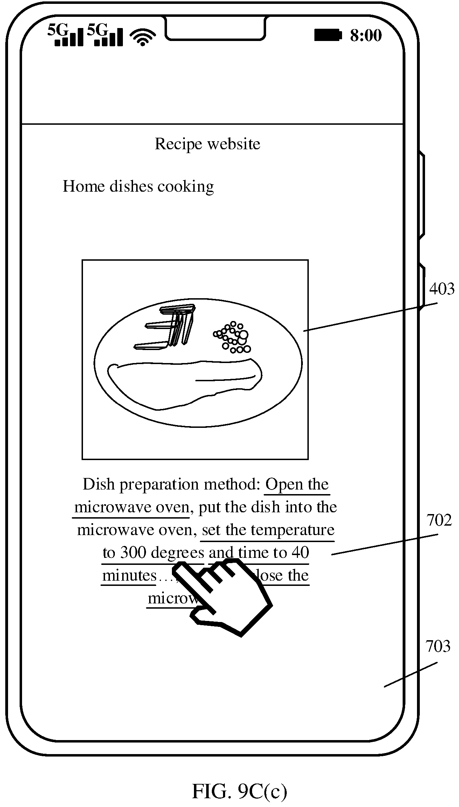

In some embodiments, after identifying that the current interface includes related control information of the second electronic device, the first electronic device may prompt the user whether to set a hyperlink. For example, as shown in FIG. 9C(a), the mobile phone displays an interface 701, and the mobile phone may perform semantic identification on the interface 701. After identifying that a text 702 of the interface 701 includes the related control information of the microwave oven, the mobile phone may pop up a pop-up window 907 shown in FIG. 9C(b). The pop-up window 907 (an example of first prompt information) is used to prompt whether to set a hyperlink. After detecting that the user taps a "Yes" option in the pop-up window 907, the mobile phone sets a hyperlink shown in FIG. 9C(c).

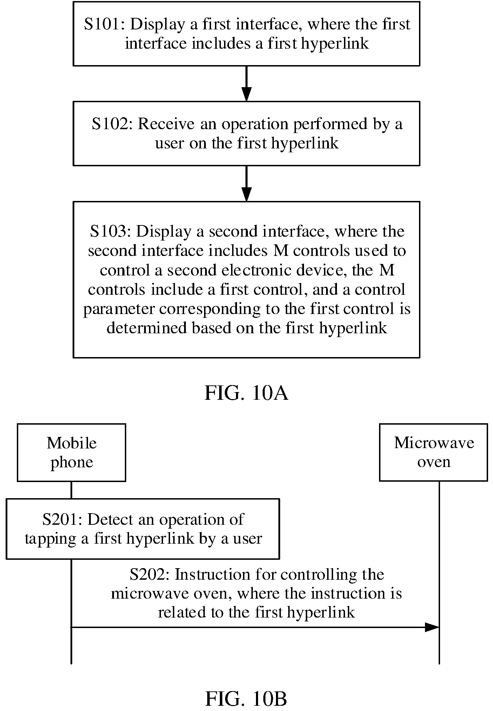

FIG. 10A is a procedure of a device control method according to an embodiment of this application. As shown in FIG. 10A, for example, a first electronic device is a mobile phone. The method includes the following steps.

S101: The mobile phone displays a first interface.

The first interface includes a first hyperlink. For example, the mobile phone displays an interface 402 shown in FIG. 5(a), and the interface 402 includes a hyperlink 404.

S102: The mobile phone receives an operation performed by a user on the first hyperlink.

For example, the mobile phone detects that the user taps the hyperlink 404 shown in FIG. 5(a).

The first hyperlink is a hyperlink that is set by a developer for a picture, a text, or another object according to an interface specification. The first hyperlink is used for device control. For example, the first hyperlink may be used to trigger the mobile phone to jump to a control interface of a device, and/or the first hyperlink is used to trigger the mobile phone to send a control instruction to a device like a smart home (for example, a microwave oven), to control the smart home device to perform a corresponding operation.

In a possible implementation, S102 may be implemented as the following step S102a (not shown in FIG. 10A).

S102a: The mobile phone detects, through a browser application, the operation of tapping the first hyperlink by the user.

S103: The mobile phone displays a second interface.

The second interface includes M controls used to control a second electronic device, the M controls include a first control, and a control parameter corresponding to the first control is determined based on the first hyperlink.

For example, the second interface is a control interface of the microwave oven.

In a possible implementation, after detecting that the user taps the first hyperlink, the browser application sends an instruction A to a framework layer. The instruction A indicates that an event that the user taps the first hyperlink occurs. After receiving the instruction A, the framework layer may control the mobile phone to display the control interface of the microwave oven, so that the user controls the microwave oven through the control interface.

For example, as shown in FIG. 5(b), the mobile phone may display a control interface 405 of the microwave oven. The interface 405 includes a switch control 407, a temperature controlling control 408, and a time controlling control 411. Based on the hyperlink, a control parameter of the temperature controlling control 408 (an example of a first control) is set to 300 degrees, a control parameter of the time controlling control 411 is set to 40 minutes, and a state of the switch control 407 is set to an on state.

An embodiment of this application further provides a device control method. Different from the embodiment corresponding to FIG. 10A, in the method, after detecting an operation of tapping a first hyperlink by a user, a first electronic device may directly control a target device associated with the first hyperlink. The first electronic device may not display a control interface of the target device. As shown in FIG. 10B, the method includes the following steps.

S201: The mobile phone detects an operation of tapping a first hyperlink by a user.

For an implementation of step S201, refer to step S101. Details are not described again.

S202: The mobile phone sends an instruction for controlling a microwave oven to the microwave oven, where the instruction is related to the first hyperlink.

For example, as shown in FIG. 7A(a), when it is detected that the user taps a hyperlink "Set the temperature to 300 degrees" set in a text 603, the mobile phone may directly control an operating temperature of the microwave oven to be adjusted to 300 degrees, without displaying a related control interface of the microwave oven.

In some embodiments, to avoid a misoperation on a smart home device caused by a user's accidental touch on a hyperlink, a method for preventing an accidental touch may be provided.

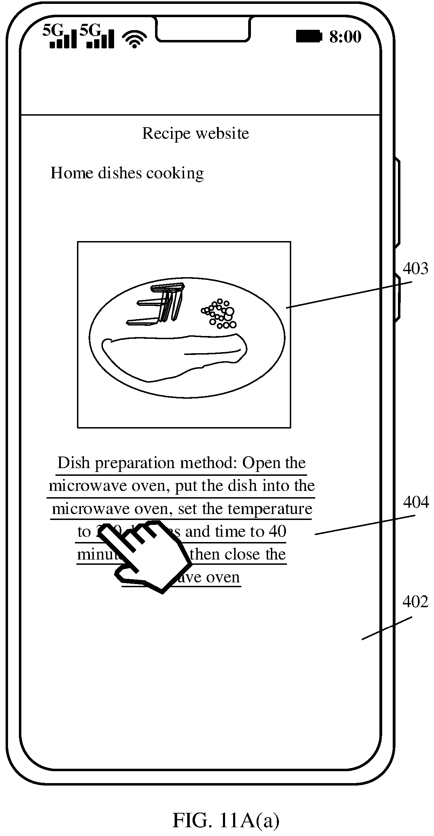

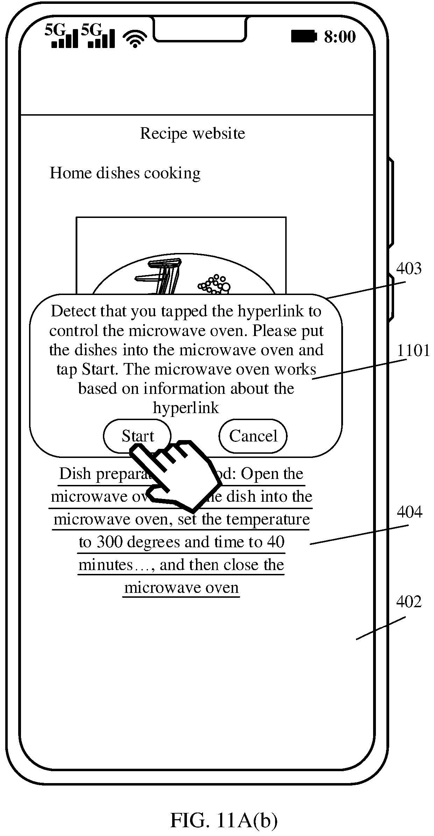

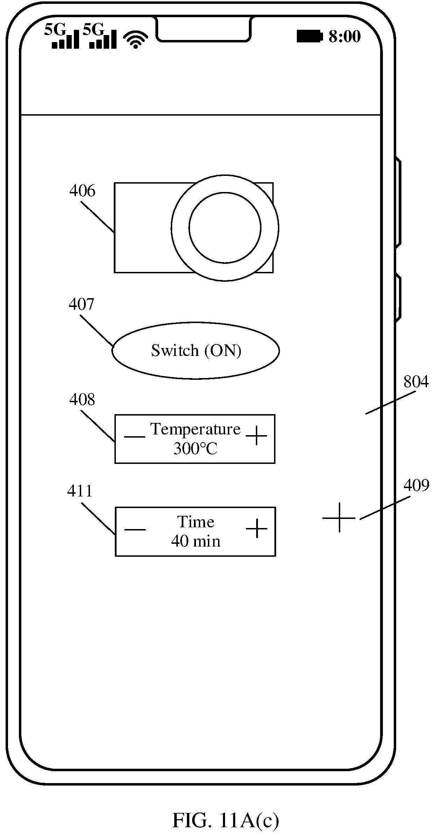

For example, as shown in FIG. 11A(a), after the operation of tapping the hyperlink 404 by the user is detected, the mobile phone may pop up a pop-up window 1101 (an example of second prompt information) shown in FIG. 11A(b), to ask the user whether to confirm to control the microwave oven. After detecting an operation of tapping a "Start" button by the user (the user indicates to control the microwave oven), the mobile phone may send an instruction to the microwave oven, where the instruction is used to control the microwave oven to be turned on. Optionally, the instruction may carry a temperature control parameter (300 degrees) and a working time control parameter (40 min). After receiving the instruction, the microwave oven works according to the temperature control parameter and working time control parameter.

Optionally, as shown in FIG. 11A(b), after detecting the operation that the user taps the "Start" button on the pop-up window 1101, the mobile phone may jump to an interface 804 shown in FIG. 11A(c). For a control parameter or a state corresponding to each control on the interface 804, refer to descriptions of related controls on the interface 405 shown in FIG. 5(a) and FIG. 5(b). Details are not described herein again.

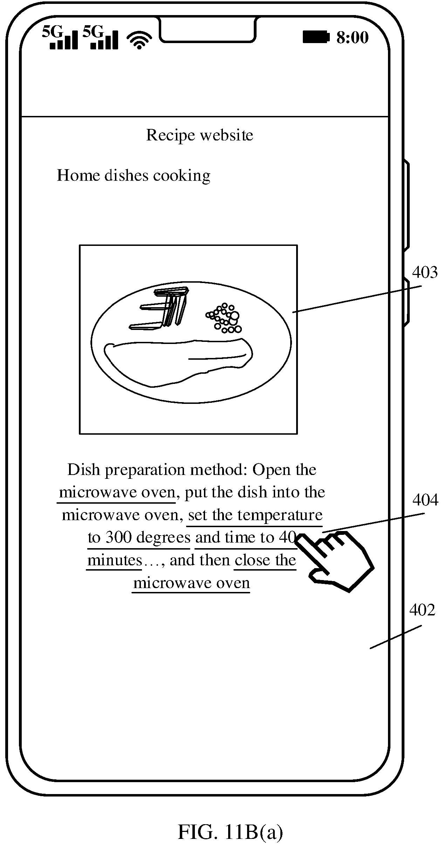

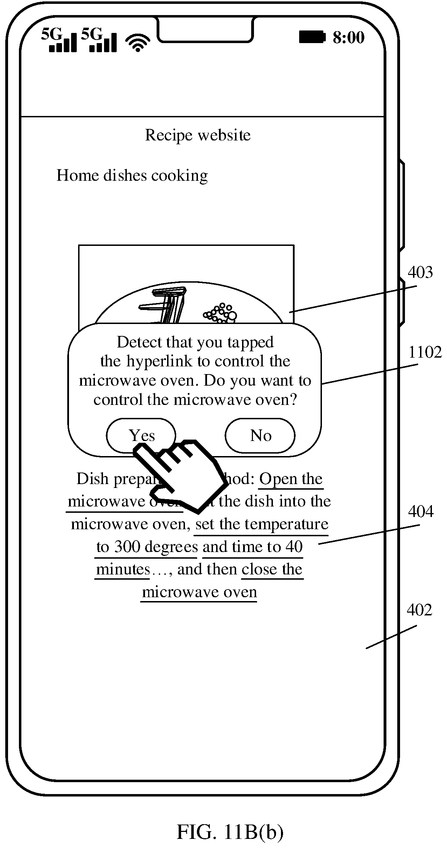

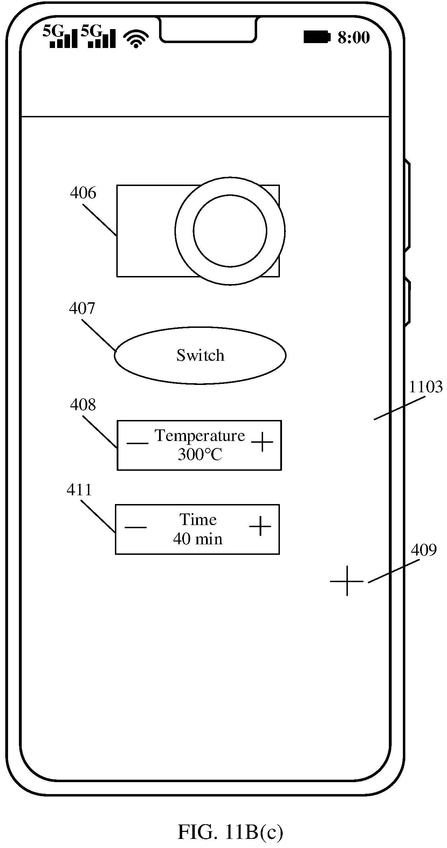

For another example, as shown in FIG. 11B(a), after detecting that the user taps a hyperlink corresponding to "Time 40 min" in the text 404, the mobile phone may pop up a pop-up window 1102 shown in FIG. 11B(b), to ask the user whether to confirm to control the microwave oven. After detecting the operation of tapping the "Start" button by the user, the mobile phone may jump to a control interface 1103 shown in FIG. 11B(c). The interface 1103 includes a switch control 407, a temperature controlling control 408, and a time controlling control 411. A control parameter of the time controlling control 411 is set based on the foregoing hyperlink (namely, a hyperlink corresponding to the text "Time 40 min"). In some examples, a state of the switch control 407 is an on state. In some other examples, a state of the switch control 407 is an off state (an off state).

In some embodiments, after detecting an operation of tapping the first hyperlink (associated with a target device) by the user, the first electronic device may further detect whether a target device exists in a home in which the user is currently located or whether the target device is online. When it is determined that the target device exists in the home of the user or the target device is online, the first electronic device may jump to the device control interface of the target device.

In some embodiments, the first electronic device may further obtain user information that can be authorized, and determine, based on the user information, whether to automatically display a control interface of the target device and/or directly send the control instruction to the target device. In some examples, if the user information indicates that the user expects to control the second electronic device, the second interface is displayed.

Optionally, the user information includes but is not limited to any one or more of the following: behavior information, location information, and time information.

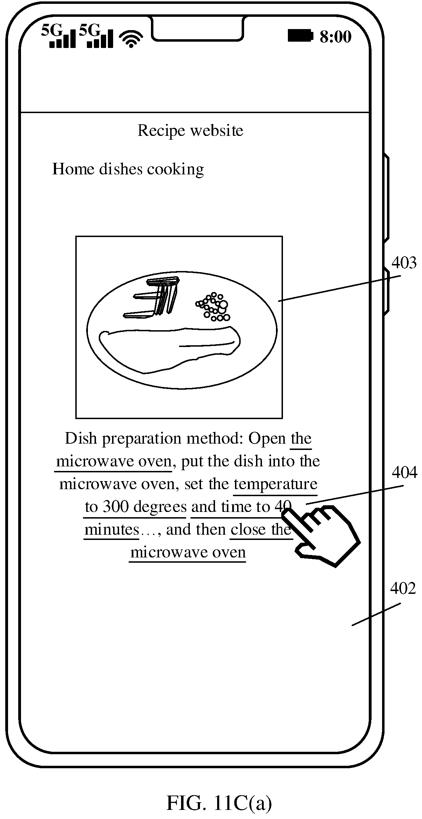

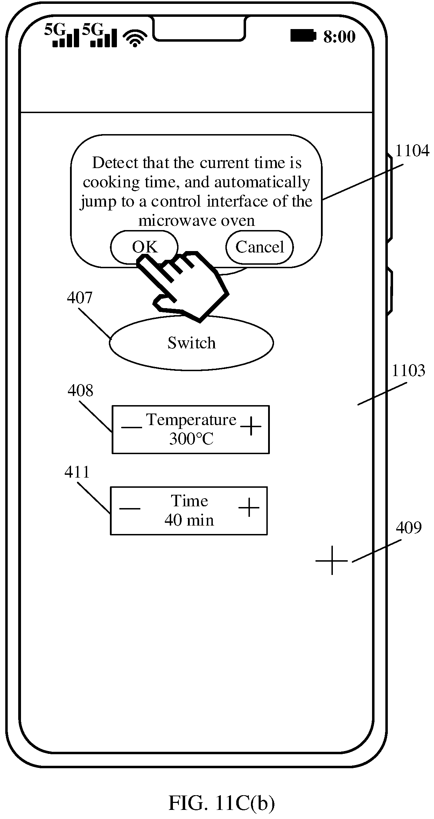

For example, as shown in FIG. 11C(a), after it is detected that the user taps the hyperlink corresponding to "Time 40 min" in the text 404, the mobile phone determines, based on the obtained user information, that a current time segment is a cooking time segment, and the mobile phone may determine that an intention of the user tapping the hyperlink in the cooking time segment is to control the target device (namely, the microwave oven), and then the mobile phone may automatically jump to a control interface 1103 of the microwave oven shown in FIG. 11C(b). Optionally, the mobile phone may further display a pop-up window 1104 shown in FIG. 11C(b).

On the contrary, after detecting that the user taps the hyperlink corresponding to "Time 40 min" in the text 404, the mobile phone determines, based on the obtained user information, that the current time segment is not the cooking time segment, and the mobile phone may ask the user whether to control the target device (microwave oven). After the user indicates to control the target device, the mobile phone may jump to a control interface of the target device and/or send a control instruction to the target device.

The foregoing mainly describes the device control method in this embodiment of this application by using a scenario in which a user watches a web page of a browser as an example. The device control method in this embodiment of this application may be further applicable to another scenario, for example, the method may be applicable to a short video scenario and a forwarding scenario.

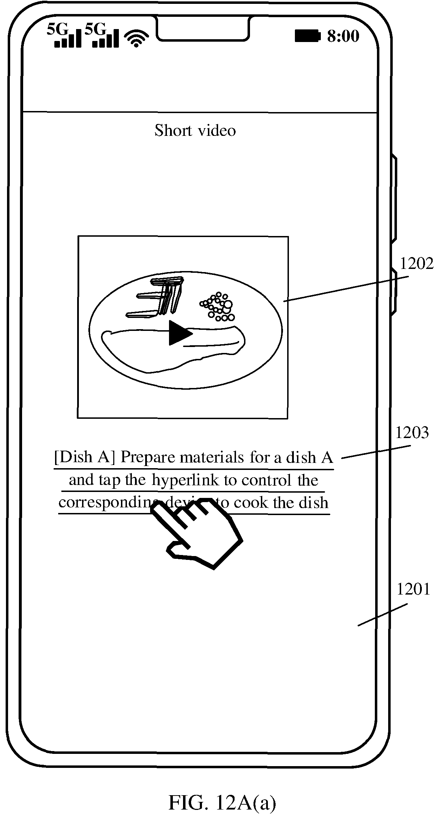

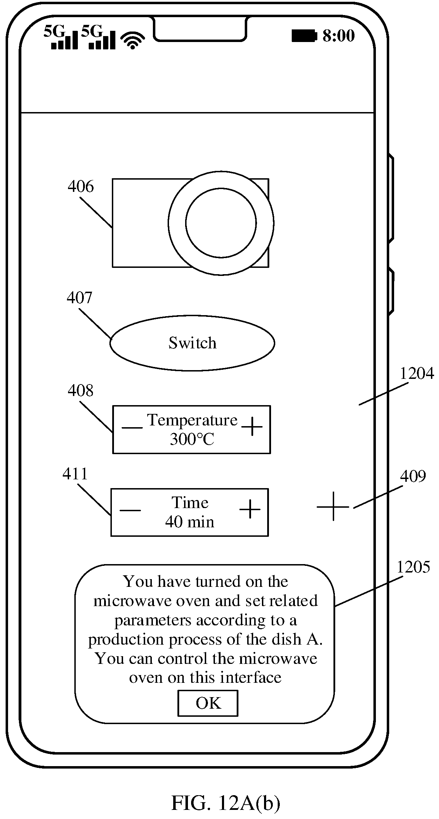

For example, as shown in FIG. 12A(a), the mobile phone displays an interface 1201. The interface 1201 includes a playing window 1202 of a short video currently watched by a user and a hyperlink 1203. After an operation of tapping the hyperlink 1203 by the user is detected, the mobile phone may jump to an interface 1204 shown in FIG. 12A(b). For a control parameter or a state corresponding to each control on the interface 1204, refer to descriptions of related controls on the interface 405 shown in FIG. 5(a) and FIG. 5(b). Details are not described herein again. Optionally, the interface 1204 further includes a pop-up window 1205, used to prompt the user that the microwave oven is automatically turned on and a control parameter of the microwave oven is set.

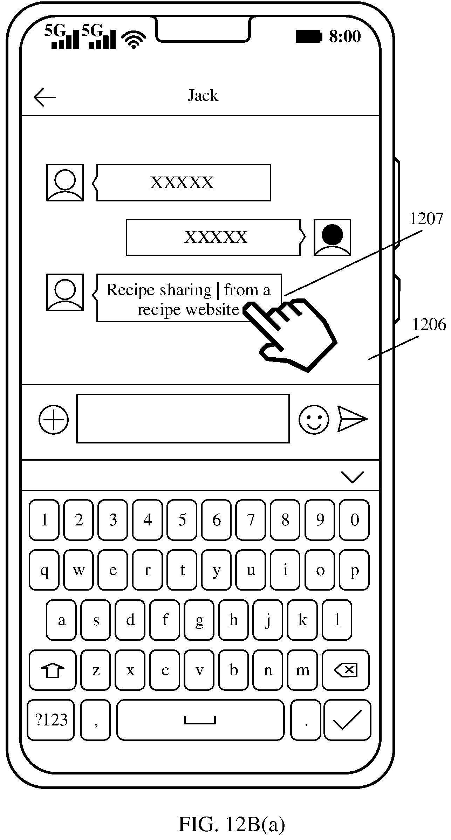

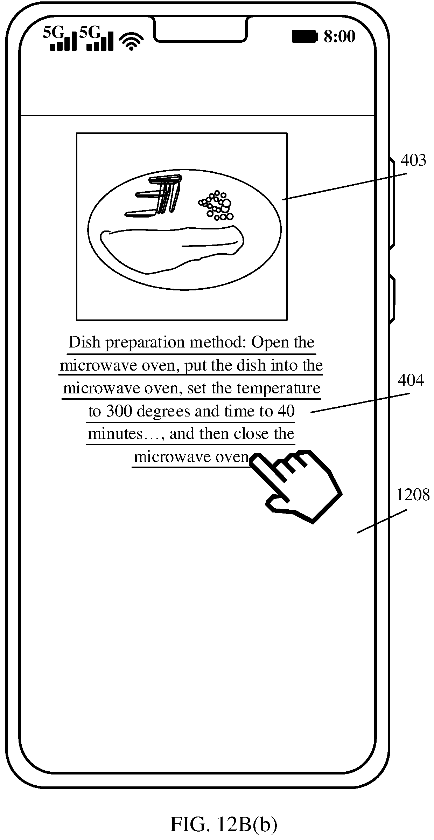

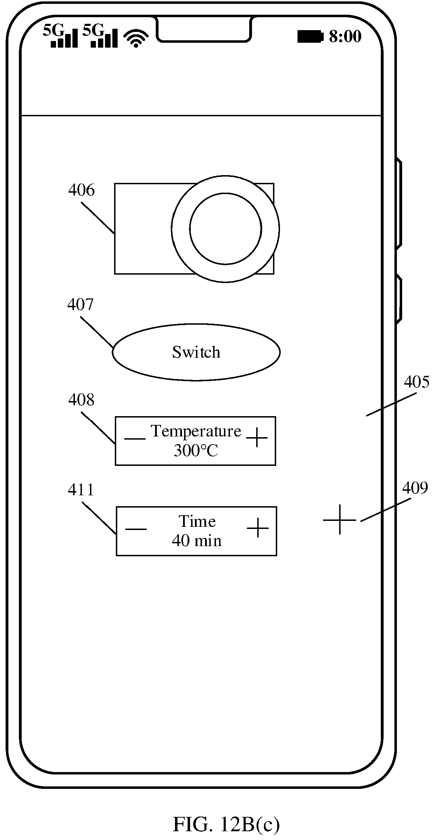

For another example, as shown in FIG. 12B(a), on a chat interface 1206, the mobile phone displays a message from a friend Jack, where the message from Jack includes a pushed recipe 1207. In response to an operation of tapping the recipe 1207 by the user, the mobile phone jumps to a recipe details interface 1208 shown in FIG. 12B(b).

Optionally, the interface 1208 includes a picture 403 of a dish in the recipe. The interface 402 further includes a text 404 for which a hyperlink is set. In some examples, after it is detected that the user taps the hyperlink of the text 404, the mobile phone opens the control interface 405 of the microwave oven shown in FIG. 12B(c). For a detailed description of the interface 405, refer to the foregoing embodiment. Details are not described herein again.

An embodiment of this application further provides a device management method. According to the method, consistent component visual experience is provided for components that have a same function and that are of different smart home devices. In the method, a device function, a display parameter corresponding to the device function, a device function, and a component corresponding to a corresponding display parameter may be set. For example, the information shown in Table 1 may be set, and the first electronic device stores the information shown in Table 1.

In a possible implementation, adaptation conditions of controls of the target function in various display parameters may be collected, to obtain a correspondence between the function, the display parameter, and the component shown in Table 1. For example, a control with a switch function usually needs to support quick control, so that a corresponding smart home device is quickly turned on or off by using the switch control. For another example, for a control with a brightness adjustment function, the control with the function is generally displayed in a manner of a slider bar. In addition, on a large-sized square display like a mobile phone or a pad, the user is usually used to sliding left or right to adjust brightness. On a square display of a wearable device, the user is usually used to sliding up or down to adjust brightness. On a display of a move focus device (like a smart screen), the user mainly performs brightness control by using an increase or decrease button on a remote control. On a circular display of a smart meter, to provide a fine-grained control effect, the smart meter may provide a ring slider bar, the user can adjust the brightness by using the ring slider.

Subsequently, when the first electronic device needs to present a control on the device control interface, the first electronic device may query Table 1, to obtain a presentation style of the control of the target function under the target display parameter.

For example, after detecting an operation of tapping the first hyperlink by the user, the mobile phone may obtain a profile of a device (for example, a microwave oven) associated with the first hyperlink. In a possible implementation, the profile is defined by a vendor of the device associated with the first hyperlink.

For example, FIG. 13 is an example of a profile of a microwave oven. Based on the profile shown in FIG. 13, a mobile phone may determine that a function (ServiceType) of the microwave oven includes a switch function (switch) and a temperature adjustment function (temperature).

Then, the mobile phone queries Table 1 to determine component styles that are respectively corresponding to the switch function and the temperature adjustment function and that are corresponding to the target display parameter. It is learned that in a medium-sized square display, a control (which may be referred to as a switch control for short) corresponding to the switch function should be presented as an (ellipse) circular button and support quick control. A control (which may be referred to as a temperature controlling control for short) corresponding to the temperature adjustment function should be presented as a left-right slider bar. In addition, the mobile phone may determine layout templates of the switch control and the temperature controlling control by querying Table 1. Therefore, the mobile phone may render the switch control and the temperature controlling control based on a style and a layout template of the switch control, and a style and a layout template of the temperature controlling control, and display a switch control 902 (an example of a second control) and a temperature controlling control 903 on the device control interface 901 shown in FIG. 14(a).

For another example, a watch may also determine a layout template of the switch control, a layout template of the temperature controlling control, a style of the switch control, and a style of the temperature controlling control by querying Table 1, render the switch control and the temperature controlling control based on the style and the layout template of the switch control and the style and the layout template of the temperature controlling control, and display the switch control 905 and the temperature controlling control 906 on the device control interface 904 shown in FIG. 14(b).

It can be learned that, for a device having a target function (for example, the switch function), a device manufacturer only needs to pay attention to a target function implemented by the device, and does not need to pay attention to display forms of the target function on different types of displays. The first electronic device may perform, based on a display parameter, adaptive adaptation and adaptive presentation on a control (for example, the switch control) corresponding to the target function. For example, a temperature controlling control in a form of a left or right slider bar is adaptively adapted and presented on a display of a mobile phone, and a temperature controlling control in a form of a ring slider bar is adaptively adapted and presented on a display of a watch. In this way, a configuration operation of a vendor can be simplified, and configuration efficiency of a device can be improved.

In some solutions, a plurality of embodiments of this application may be combined, and a combined solution is implemented. Optionally, some operations in procedures of the foregoing method embodiments are optionally combined, and/or a sequence of some operations is optionally changed. In addition, an execution sequence between steps of each process is merely an example, and does not constitute a limitation on an execution sequence between the steps. The steps may be alternatively performed in another execution sequence. It is not intended to indicate that the execution order is the only order in which these operations can be performed. A person of ordinary skill in the art may learn a plurality of manners of permutating the operations described in this specification. In addition, it should be noted that process details related to an embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiment.

In addition, the foregoing method embodiments may be implemented separately or in combination.

It may be understood that, to implement the foregoing functions, electronic devices in embodiments of this application include corresponding hardware structures and/or software modules for performing the functions. With reference to the units and algorithm steps described in embodiments disclosed in this application, embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in embodiments of this application.

In the embodiments of this application, the electronic device may be divided into functional units based on the foregoing method example. For example, each function unit may be obtained through division based on each corresponding function, or two or more functions may be integrated into one proces sing unit. The integrated unit may be implemented in a form of hardware, or may be implemented in a form of a software function unit. It should be noted that, in this embodiment of this application, division into the units is an example, and is merely a logical function division. In actual implementation, another division manner may be used.

FIG. 15 is a schematic block diagram of a device control apparatus according to an embodiment of this application. The apparatus may be the foregoing first electronic device or a component having a corresponding function. The apparatus 1700 may exist in a form of software, or may be a chip that can be used in a device. The apparatus 1700 includes a processing unit 1702 and a communication unit 1703. Optionally, the communication unit 1703 may be further divided into a sending unit (not shown in FIG. 15) and a receiving unit (not shown in FIG. 15). The sending unit is configured to support the apparatus 1700 in sending information to another electronic device. The receiving unit is configured to support the apparatus 1700 in receiving information from another electronic device.

Optionally, the apparatus 1700 may further include a storage unit 1701, configured to store program code and data of the apparatus 1700. The data may include but is not limited to original data, intermediate data, or the like.

If the apparatus 1700 is a first electronic device or a related device that controls the apparatus, the processing unit 1702 may be configured to support a receiving device in performing S201 in FIG. 10B, and/or another process of the solution described in this specification. The communication unit 1703 is configured to support communication between the apparatus 1700 and another electronic device (for example, the foregoing second electronic device), for example, send a control instruction to the second electronic device.

Optionally, the apparatus 1700 may further include a display unit (not shown in FIG. 15), configured to display an interface and/or other information, for example, used to display a first interface, where the first interface includes a first hyperlink.

Optionally, the apparatus 1700 may further include an input unit (not shown in FIG. 15), configured to receive an instruction input by a user, and the like, for example, configured to receive an operation performed by the user on the first hyperlink.

In a possible manner, the processing unit 1702 may be a controller or the processor 501 shown in FIG. 2B, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

In a possible manner, the communication unit 1703 may include the transceiver 503 shown in FIG. 2B, and may further include a transceiver circuit, a radio frequency component, and the like.

In a possible manner, the storage unit 1701 may be the memory 502 shown in FIG. 2B.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the intelligent device control method in the foregoing embodiments.

An embodiment of this application further provides a chip system. The chip system includes a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

It should be understood that the steps in the foregoing method embodiments may be completed by using an integrated logic circuit of hardware in the processor or an instruction in a form of software. The steps of the method disclosed with reference to embodiments of this application may be directly performed by a hardware processor, or may be performed through a combination of hardware in the processor and a software module.

Embodiments of this application further provide a computer-readable storage medium. The computer-readable storage medium stores computer instructions. When the computer instructions are run on an electronic device, the electronic device is enabled to perform the related method steps, to implement the intelligent device control method in the foregoing embodiments.

Embodiments of this application further provide a computer program product. When the computer program product runs on a computer, the computer is enabled to perform the foregoing related steps, to implement the intelligent device control method in the foregoing embodiments.

In addition, an embodiment of this application further provides an apparatus. The apparatus may be specifically a component or a module, and the apparatus may include a processor and a memory that are connected to each other. The memory is configured to store computer-executable instructions. When the apparatus runs, the processor may execute the computer-executable instructions stored in the memory, so that the apparatus performs the intelligent device control method in the foregoing method embodiments.

The electronic device, the computer-readable storage medium, the computer program product, or the chip provided in embodiments of this application is configured to perform the corresponding method provided above. Therefore, for beneficial effects that can be achieved, refer to the beneficial effects of the corresponding method provided above. Details are not described herein again.

It may be understood that, to implement the foregoing functions, the electronic device includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in this embodiment is an example and is merely logical function division. In actual implementation, there may be another division manner.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed apparatuses and methods may be implemented in other manners. For example, the described terminal device embodiment is merely an example. For example, division into the modules and the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) or the processor to perform all or some of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A device control method, applied to a first electronic device, wherein the method comprises:
displaying a first interface, wherein the first interface comprises a first hyperlink; and
receiving an operation performed by a user on the first hyperlink, and displaying a second interface, wherein
the second interface comprises M controls used to control a second electronic device, the M controls comprise a first control, and a control parameter corresponding to the first control is determined based on the first hyperlink.

2. The method according to claim 1, wherein the method further comprises:
identifying information related to the second electronic device on the first interface; and
setting the first hyperlink based on the information related to the second electronic device.

3. The method according to claim 2, wherein the identifying information related to the second electronic device on the first interface comprises:
detecting a target operation input by the user, and identifying the information related to the second electronic device on the first interface.

4. The method according to claim 2 or 3, wherein before the setting the first hyperlink based on the information related to the second electronic device, the method further comprises: displaying first prompt information, wherein the first prompt information is used to prompt whether to set a hyperlink; and
the setting the first hyperlink based on the information related to the second electronic device comprises: detecting an operation that is input by the user and that indicates to set a hyperlink, and setting the first hyperlink based on the information related to the second electronic device.

5. The method according to claim 1, wherein the first hyperlink is preset.

6. The method according to any one of claims 1 to 5, wherein after the receiving an operation performed by a user on the first hyperlink, the method further comprises:
displaying second prompt information, wherein the second prompt information is used to prompt whether to control the second electronic device.

7. The method according to claim 6, wherein the displaying a second interface comprises:
detecting an operation that is input by the user and that indicates to control the second electronic device, and displaying the second interface.

8. The method according to any one of claims 1 to 5, wherein the method further comprises: obtaining user information; and
the displaying a second interface comprises: if the user information indicates that the user expects to control the second electronic device, displaying the second interface.

9. The method according to any one of claims 1 to 8, wherein after the displaying the second interface, the method further comprises: sending a control instruction to the second electronic device, wherein the control instruction indicates the second electronic device to perform the target operation, and the target operation is determined based on the first hyperlink.

10. The method according to claim 9, wherein the sending a control instruction to the second electronic device comprises:
detecting the operation that is input by the user and that indicates to control the second electronic device, and sending the control instruction to the second electronic device.

11. The method according to claim 9, wherein the method further comprises: obtaining the user information; and
the sending a control instruction to the second electronic device comprises: if the user information indicates that the user expects to control the second electronic device, sending the control instruction to the second electronic device.

12. The method according to any one of claims 1 to 11, wherein the M controls comprise a second control, a UI effect of the second control is determined by the first electronic device based on a display parameter of the first electronic device and a target function corresponding to the second control, and the display parameter comprises a size of a display and a shape of the display.

13. The method according to claim 12, wherein the method further comprises: receiving a profile of the second electronic device from a device management platform, wherein the profile comprises information about one or more functions of the second electronic device, and the one or more functions comprises the target function.

14. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 13.

15. A computer-readable storage medium, wherein the computer-readable storage medium comprises a computer program, and when the computer program is run on an electronic device, the electronic device is enabled to perform the method according to any one of claims 1 to 13.
